# EUROPÄISCHE PATENTSCHRIFT

(11) **EP 3 105 939 B1**
(45) Veröffentlichungstag und Bekanntmachung des Hinweises auf die Patenterteilung: **20.05.2020**
(21) Anmeldenummer: 14705996.8
(22) Anmeldetag: 11.02.2014
(51) Int. Cl.: H04Q 9/00, G01B 21/20

(54) **MESSVORRICHTUNG UND VERFAHREN ZUM ERFASSEN VON EIGENSCHAFTEN EINES OBJEKTS**
MEASURING DEVICE AND METHOD FOR DETECTING THE CHARACTERISTICS OF AN OBJECT
SYSTÈME DE MESURE ET PROCÉDÉ POUR DÉTECTER DES PROPRIÉTÉS D'UN OBJET

(43) Veröffentlichungstag der Anmeldung: 21.12.2016
(73) Patentinhaber: VEGA Grieshaber KG, 77709 Wolfach (DE)
(72) Erfinder: WELLE, Roland, 77756 Hausach (DE); DIETERLE, Levin, 77709 Wolfach (DE)
(74) Vertreter: Maiwald Patent- und Rechtsanwaltsgesellschaft mbH
(86) Internationale Anmeldenummer: PCT/EP2014/052650
(87) Internationale Veröffentlichungsnummer: WO 2015/120885

(56) Entgegenhaltungen:
- EP-A1- 2 390 620
- WO-A1-96/38708
- DE-A1-102011 011 300
- US-A- 6 130 437

## Beschreibung

### Technisches Gebiet

Die vorliegende Erfindung betrifft das technische Gebiet der Messtechnik. Insbesondere betrifft die vorliegende Erfindung eine Messvorrichtung zum Erfassen von Eigenschaften eines Objektes, ein Verfahren zum Erfassen von Eigenschaften eines Objektes und ein Computerprogrammprodukt zum Erfassen von Eigenschaften eines Objektes.

### Hintergrund der Erfindung

Bei dem Transport von Objekten ist es oftmals von Interesse, festzustellen, welche Menge oder welche Anzahl der Objekte transportiert worden ist. Förderbänder in Steinbrüchen, Förderbänder in der Landwirtschaft oder in der Hochofenindustrie, aber auch Förderbänder, die bei der Energieerzeugung oder in Hafenanlagen eingesetzt werden, führen zu Fragen, der transportierten Menge. In vielen dieser Industriezweige ist es insbesondere von Interesse, während eines Befüll- oder Entleervorgangs die über ein Förderband transportierte Menge an Material in Form eines Volumen- oder Massenwertes zu erfassen, um anschließend beispielsweise automatisierte Abrechnungen zu erstellen oder rechtzeitig das Befüllen zu stoppen. Zur Bestimmung der transportierten Menge eines Objektes können beispielsweise Bandwaagen genutzt werden, die die aktuell vom Förderband und dem geförderten Medium ausgeübte Gewichtskraft fortlaufend erfassen.

Die Überwachung von Förderanlagen mit Hilfe von Bandwaagen kann jedoch zu betriebsbedingten Schwingungen führen, die das Messergebnis verfälschen können. Zudem muss die Messeinrichtung für die Nutzung einer Bandwaage direkt beim Aufbau der Förderstrecke konstruktiv integriert werden und eine Nachrüstung bestehender Anlagen ist umständlich.

EP 2 390 620 A1 beschreibt einen optoelektronischen Sensor zur Detektion von Objektkanten von relativ zu dem Sensor bewegten Objekten, mit einer Lichtsendeeinrichtung und zwei Lichtempfängern zur Aufnahme eines durch den jeweiligen Sendelichtstrahl auf einem Objekt erzeugten Lichtflecks.

### Zusammenfassung der Erfindung

Dementsprechend wird gemäß einem Aspekt der vorliegenden Erfindung eine Messvorrichtung zum Erfassen von Eigenschaften eines Objektes, ein Verfahren zum
Erfassen von Eigenschaften eines Objektes und ein Computerprogrammprodukt zum Erfassen von Eigenschaften eines Objektes beschrieben.

Es mag erwünscht sein, ein effektives Messen der Eigenschaften eines bewegten Objekts zu ermöglichen.

Der Gegenstand der Erfindung wird von den unabhängigen Ansprüchen festgelegt. Weitere Ausführungsbeispiele der Erfindung sind in den Unteransprüchen angegeben.

Gemäß einem Aspekt der Erfindung wird eine Messvorrichtung zum Erfassen von Eigenschaften eines Objektes auf einer Objektführungseinrichtung angegeben. Die Messvorrichtung weist eine Sendeeinrichtung, zumindest zwei Empfangseinrichtungen und eine Steuereinrichtung auf. In einem Beispiel mag eine Messvorrichtung mit nur einer einzigen Sendeeinrichtung angegeben sein. In einem anderen Beispiel mögen zumindest zwei Sendeeinrichtungen verfügbar sein. Die Steuereinrichtung ist dafür eingerichtet, ein Sendesignal mit Hilfe der Sendeeinrichtung auszusenden. Außerdem ist die Steuereinrichtung eingerichtet, ein Empfangssignal und insbesondere zumindest zwei Empfangssignale mit Hilfe der zumindest zwei Empfangseinrichtungen zu empfangen, wobei die Empfangssignale von dem selben Sendesignal verursacht werden. In einem Beispiel mögen die zumindest zwei Empfangseinrichtungen das Empfangssignal im Wesentlichen parallel oder gleichzeitig empfangen. Beim Empfangen mögen die Empfangseinrichtungen das Empfangssignal mit einem Phasenversatz empfangen, da die Empfangseinrichtungen an unterschiedlichen Positionen angeordnet sein mögen. Der Phasenversatz mag durch die Position der Empfangseinrichtungen oder der Empfangseinheiten bestimmt werden. Das Empfangssignal mag das Sendesignal sein, welches im Wesentlichen durch Reflexionen an dem Objekt und/oder an der Objektführungseinrichtung entstanden ist. Insbesondere mag das Empfangssignal durch eine Reflexion an der Objektoberfläche entstanden sein.

Die Steuereinrichtung ist eingerichtet, anhand der Empfangssignale der zumindest zwei Empfangseinrichtungen die Struktur oder Topologie des Objektes entlang eines linienförmigen Bereichs innerhalb einer Breite der Objektführungseinrichtung auszuwerten. Die Begrenzung auf eine vorgebbare Breite mag sicherstellen, dass sämtliche Teile, die zu dem Objekt gehören, von den zumindest zwei Empfangseinrichtungen erfasst werden. Die Breite, innerhalb der die Auswertung erfolgen soll, mag in einem Beispiel an der Steuereinrichtung einstellbar sein, beispielsweise durch das Einstellen eines entsprechenden Parameters.

Die Auswertung kann zu einem Höhenverlauf des Objektes entlang des linienförmigen Bereichs über einer Bezugsebene führen. Dieser Höhenverlauf kann bereitgestellt werden. Aus diesem Höhenverlauf mag das Volumen unterhalb des Höhenverlaufs ermittelt werden. Das ermittelte des Volumen kann bereitgestellt werden.

Die Messvorrichtung kann fest in Bezug zu der Objektführungseinrichtung installiert werden. Dazu mag die Messvorrichtung eine Haltevorrichtung aufweisen.

Die Begrenzung der Objektführungseinrichtung auf eine vorgebbare Breite mag es ferner ermöglichen, die Breite und/oder Länge des linienförmigen Bereiches zu begrenzen, so dass das Sendesignal und/oder Empfangssignal im Wesentlichen nur innerhalb des begrenzten Bereiches betrachtet werden muss. So kann beispielsweise eine Sendestrahlrichtung des Sendesignals und/oder eine Empfangsrichtung des Empfangssignals auf die Breite und/oder Länge des linienförmigen Bereichs fokussiert werden. In anderen Worten mag ein Winkelbereich für die Strahlrichtungen des Sendesignals und/oder des Empfangssignals vorgebbar sein, um die Begrenzung auf einen linienförmigen Bereich zu erreichen. Ein linienförmiger Bereich mag eine Länge aufweisen, die größer als die Breite des linienförmigen Bereichs ist. Die Länge des linienförmigen Bereichs mag im Wesentlichen der Breite der Objektführungseinrichtung entsprechen. Der linienförmige Bereich mag in einem Beispiel rechteckig oder oval ausgestaltet sein. Der linienförmige Bereich mag im Wesentlichen ein Footprint des Sendesignals und/oder des Empfangssignals sein oder ein Teil eines Footprints.

In anderen Worten mag das Sendesignal aufgrund der Antennencharakteristik einen Bereich der Oberfläche des Objektes erfassen, der größer als der interessierende linienförmige Bereich ist. Diese Antennencharakteristik und damit der bestrahlte Bereich kann durch physikalische Strahlformung des Sendesignals beispielsweise durch eine physikalische Fokussierungseinrichtung und/oder durch Strahlformung des Sendesignals, d.h. durch Veränderung des Phasenversatzes der Sendeeinrichtungen untereinander, vorgegeben werden. Der bestrahlte Bereich mag den von dem ausgesendeten Sendesignal erfassten Bereich umfassen und auch als belichteter Bereich bezeichnet werden.

Durch anschließende digitale Verarbeitung der Empfangssignale von den Empfangseinrichtungen, beispielsweise durch digitale Strahlformung, kann das Reflexionssignal den gewünschten linienförmigen Bereich aus dem beleuchteten Bereich generieren oder extrahieren und/oder den linienförmigen Bereich in quadratische oder runde Abtastflächen zerlegen, um so das Volumen unter den Abtastflächen zu bestimmen und zu einem Gesamtvolumen des linienförmigen Bereichs aufzusummieren. Bei der Berechnung des Gesamtvolumens des linienförmigen Bereichs können Methoden der Integralrechnung genutzt werden, indem die Abtastflächen klein gemacht werden und dadurch die Anzahl der Abtastflächen entlang des linienförmigen Bereichs erhöht wird. Der linienförmige Bereich mag auch als eine Zeitscheibe bezeichnet werden, das mag bedeuten, ein linienförmiger Bereich mag die in einem Messvorgang erfasste Struktur aufweisen.

In einem Beispiel sind statt einer einzigen Sendeeinrichtung und zumindest zwei Empfangseinrichtungen zumindest zwei Sende-/Empfangseinrichtungen vorhanden. Eine Sende-/Empfangseinrichtung mag zum Senden und Empfangen eines Signals mit einer einzigen Einrichtung vorgesehen sein. Durch Umschalten in der Steuereinrichtung kann die Sende-/Empfangseinrichtung so betrieben werden, dass ein Signal über die Sende-/Empfangseinrichtung ausgesendet wird und ein reflektiertes Signal von der Sende-/Empfangseinrichtung empfangen wird. Der Zustand, in dem das Signal ausgesendet wird, mag als Sendemodus bezeichnet werden und der Zustand, in dem das Signal empfangen wird, mag als Empfangsmodus bezeichnet werden. Es ist beispielsweise möglich mit den zumindest zwei Sende-/Empfangseinrichtungen in Senderichtung ein Sendesignal zu erzeugen, das eine große Fläche beleuchtet und mit den zumindest zwei Sende-/Empfangseinrichtungen eine Strahlformung des Empfangsstrahls durchzuführen, so dass die Fokussierung und/oder Zerlegung eines linienförmigen Bereiches möglich ist. Zur Strahlformung des Sendesignals und/oder des Empfangssignal mögen zumindest zwei Sendeeinrichtungen bzw. zumindest zwei Empfangseinrichtungen vorgesehen sein, die miteinander gekoppelt sind und folglich ein Antennenarray bilden.

Gemäß einem weiteren Aspekt der vorliegenden Erfindung mag ein Verfahren zum Erfassen von Eigenschaften eines Objektes auf einer Objektführungseinrichtung beschrieben werden. Eine Eigenschaft des Objektes mag dessen Oberflächenstruktur und/oder dessen Oberflächentopologie sein. Das Verfahren mag vorsehen, ein Sendesignal über eine Sendeeinrichtung auszusenden und ein Empfangssignal über zumindest zwei Empfangseinrichtungen zu empfangen, wobei die Empfangssignale von dem selben Sendesignal verursacht sind. Das Empfangen der Empfangssignale mag in einem Beispiel im Wesentlichen gleichzeitig erfolgen. In diesem Zusammenhang mag gleichzeitig bedeuten, dass die Empfangssignale im Wesentlichen in einem Zeitfenster empfangen werden, welches als Gleichzeitigkeitsbereich interpretiert werden kann. Der Begriff "gleichzeitig", "parallel" oder "zur gleichen Zeit" mag bedeuten, dass die Empfangssignale von dem gleichen Sendesignal verursacht werden. Aufgrund der unterschiedlichen örtlichen Anordnung der Empfangseinrichtungen kann die Reflexion des selben Sendesignals beim Empfang an unterschiedlichen Empfangseinrichtungen zu unterschiedlichen Zeitpunkten innerhalb des Zeitfensters eintreffen.

Beispielsweise findet das Senden und Empfangen in der selben Ebene in einem vorgebbaren Abstand gegenüber einer Objektführungseinrichtung statt. In anderen Worten mag die Objektführungseinrichtung in einer Signalausbreitungsrichtung gegenüber der Ebene angeordnet sein, in der sich die Sendeeinrichtung und/oder die zumindest zwei Empfangseinrichtungen befinden. Solange die Lage der Sendeeinrichtung und/oder der Empfangseinrichtung zueinander bekannt ist, mag jedoch eine beliebige Anordnung der Sendeeinrichtung und/oder der zumindest zwei Empfangseinrichtungen möglich sein.

Durch das Begrenzen einer Bewegung des Objektes auf einen Bereich innerhalb einer vorgebbaren Breite, mag sichergestellt werden, dass sämtliche Bestandteile des Objekts, welche erfasst werden sollen, auch erfasst werden können. Die Antennencharakteristik des Sendesignals kann an die Begrenzung der Objektführungseinrichtung angepasst werden. Die Antennencharakteristik kann eine Charakteristik eines Kugelstrahlers bei Verwendung einer einzigen Sendeeinrichtung sein. Ein Array kann aber auch mittels Strahlformung eine beliebige Charakteristik erzeugen, wenn zumindest zwei Sendeeinrichtungen in dem Array genutzt werden. Durch eine physikalische Strahlformungseinrichtung oder Fokussiereinrichtung, wie beispielsweise eine Parabolrinne, lässt sich ebenfalls eine Strahlformung erzielen

Nach dem Empfangen des Empfangssignals oder der Empfangssignale kann die Struktur des Objektes anhand des Empfangssignals und/oder anhand der Empfangssignale ausgewertet werden, welches/welche mit den zumindest zwei Empfangseinrichtungen entlang eines linienförmigen Bereichs innerhalb der Breite der Objektführungseinrichtung erfasst worden ist. Die Formung des linienförmigen Bereichs mag durch mathematische Operationen bei der Signalnachverarbeitung beispielsweise in der Steuereinrichtung oder in einer Auswerteeinrichtung erfolgen. In einem Beispiel mag der linienförmige Bereich innerhalb der Breite der Objektführungseinrichtung ein Footprint oder eine Projektion sein, der/die durch die Sendeeinrichtung und/oder durch die zumindest zwei Empfangseinrichtungen generiert wird.

Gemäß noch einem anderen Aspekt der vorliegenden Erfindung wird ein Computerprogrammprodukt angegeben, welches das erfindungsgemäße Verfahren ausführt, wenn es von einem Prozessor ausgeführt wird.

Gemäß noch einem anderen Aspekt der vorliegenden Erfindung wird ein computerlesbarer Datenträger angegeben, auf dem ein Programmcode gespeichert ist, der das erfindungsgemäße Verfahren zum Erfassen von Eigenschaften eines Objektes ausführt, wenn er von einem Prozessor ausgeführt wird.

Ein computerlesbares Speichermedium mag eine Floppy Disk, eine Festplatte, eine DVD (Digital Versatile Disc), eine Blu-Ray Disc™, ein USB (Universal Serial Bus)-Speichermedium, ein RAM (Random Access Memory), ein ROM (Read Only Memory) oder ein EPROM (Erasable Programmable Read Only Memory) sein. Als computerlesbares Speichermedium kann auch ein Kommunikationsnetzwerk, wie das Internet angesehen werden, welches das Aufspielen oder Herunterladen von Programmcode ermöglichen mag.

Die Messvorrichtung mag ein Feldgerät oder ein Sensor sein. Der Sensor mag die Sendeeinrichtung, die zumindest zwei Empfangseinrichtungen und/oder die Steuereinrichtung aufweisen. In einem Beispiel mag die Messvorrichtung auch die Objektführungseinrichtung aufweisen, die eine vorgebbare Breite hat. Der Sensor mag an die geometrischen Größen der Objektführungseinrichtung, insbesondere an die Breite der Objektführungseinrichtung angepasst sein. Insbesondere mag die Größe des Sensors an die geometrische Größe der Objektführungseinrichtung angepasst sein. Der Sensor mag jedoch in einem Beispiel auch kleiner als die Breite der Objektführungseinrichtung sein und durch eine Steuerung der Empfangsrichtungen einen größeren Bereich erfassen. Das Feldgerät mag als ein Füllstandmessgerät, Volumenmessgerät und/oder als Durchflussmessgerät ausgestaltet sein und kann in eine bestehende Objektführungseinrichtung angepasst werden. In einem Beispiel kann die Messvorrichtung mit einem Füllstandmessgerät kombiniert werden und eine Plausibilitätskontrolle des transportierten Volumens durch eine Füllstandmessung durchführen.

Zur Anpassung an die Objektführungseinrichtung mag das Feldgerät und/oder die Messvorrichtung eine Fokussiereinrichtung aufweisen, mit der die Breite des linienförmigen Bereichs in Bewegungsrichtung des Objektes festgelegt werden kann, der erfasst werden kann. Unabhängig davon kann das Feldgerät und/oder die Messvorrichtung eine Einrichtung zur Strahlformung aufweisen, mit der die Länge des linienförmigen Bereichs in einer lateralen Richtung einstellbar ist und/oder mit der der Bereich in kleine Abtastflächen zerlegbar ist.

Die Objektführungseinrichtung mag eingerichtet sein, eine Bewegung des Objektes auf einen Bereich innerhalb der vorgebbaren Breite zu begrenzen. So kann die vorgebbare Breite der Objektführungseinrichtung in der Steuereinrichtung eingestellt werden, um den Empfangsbereich der Empfangsstrahlen, d.h. die Empfangsrichtungen, auf die Breite der der Objektführungseinrichtung einzuschränken oder auf die Breite abzustimmen. In einem Beispiel mag die Objektführungseinrichtung sowohl die Bewegungsrichtung als auch den Bereich innerhalb dessen sich das Objekt bewegen kann vorgeben. In einem anderen Beispiel mag sich das Objekt selbst bewegen und die Bewegungsrichtung vorgeben. Die Objektführungseinrichtung mag im Wesentlichen dazu eingerichtet sein, dafür zu sorgen, dass sich das Objekt innerhalb des Bereiches der vorgebbaren Breite bewegt, sodass der interessierende linienförmige Bereich innerhalb von Begrenzungen lokalisierbar ist. Für die Einschränkung der Bewegung mag die Objektführungseinrichtung beispielsweise eine Bande, eine Leitplanke oder eine Barriere aufweisen oder aber auch eine abfallende Kante in Richtung der Schwerkraft, so dass Bestandteile des Objektes, die außerhalb der Breite liegen würden zu Boden fallen.

In einem Beispiel mag die Objektführungseinrichtung unabhängig von der Messvorrichtung arbeiten.

Die Fokussiereinrichtung oder Fokussierungseinrichtung kann als physikalische Fokussiereinrichtung, beispielsweise als Parabolrinne, als Antennenarray, dielektrische Zylinderlinse oder vergleichbare Fokussiereinrichtung ausgebildet sein. Zusätzlich mag es möglich sein die erfassten Messdaten zur mathematischen Fokussierung entlang der Bewegungsrichtung der Fördereinrichtung und/oder entlang der Bewegungsrichtung des Objektes mittels eines SAR (Synthetic Aperture Radar) Algorithmus auszuwerten. Wird eine physikalische Fokussierung entlang der Bewegungsrichtung vorgenommen, kann die SAR Auswertung entfallen. Für die SAR Auswertung wird kein Array benötigt, denn es mögen lediglich Dopplerdaten ausgewertet werden. Ein Array wird aus zumindest zwei Empfangseinrichtungen und/oder aus zumindest einer Sendeeinrichtung gebildet, bei denen die örtliche Lage zueinander bekannt ist und die jeweils miteinander verbunden sind. Die zumindest eine Sendeeinrichtung mag eine einzige Sendeeinrichtung oder zumindest zwei Sendeeinrichtungen sein. Aus der örtlichen Lage zueinander mag sich ein Phasenversatz zwischen den Sendesignalen und/oder Empfangssignalen bestimmen lassen. Die Anordnung der Empfangseinrichtungen und/oder Sendeeinrichtungen in dem Array mag beliebig sein. Für die Auswertung, insbesondere für die Strahlformung des Empfangssignals sollte die Lage der Empfangseinrichtungen und/oder Sendeeinrichtungen zueinander bekannt sein. Die Anordnung der zumindest zwei Empfangseinrichtungen als lineares Array mag die Strahlformung in lateraler Richtung ermöglichen.

Mit dem beschriebenen Gegenstand mag sich ein linienförmiger Bereich der Objektführungseinrichtung abtasten lassen und daraus eine Topologie der Oberfläche des an dem Sensor vorbeigeführten Objekts erstellen lassen. Der linienförmige Bereich mag dabei im Wesentlichen eine Zeitscheibe der Topologie sein, wobei sich die gesamte Topologie aus dem Zusammensetzen mehrerer Zeitscheiben ergibt. Die Topologie mag im Wesentlichen aus der Entfernung der Oberfläche des Objektes von dem Sensor ermittelt werden. Die Topologie mag eine Höhe über einer Bezugsfläche der Objektführungseinrichtung angeben. Die Bezugsfläche mag eine Fläche sein, auf der das Objekt liegt, beispielsweise das Band eines Förderbandes. Ist die Lage der Bezugsfläche bekannt, d.h. ist die Entfernung der Bezugsfläche von dem Sensor bekannt, kann die absolute Höhe des Objekts oder die Höhe der Topologie der Oberfläche des Objekts ermittelt werden. Auf diese Weise kann die Fläche unter der Topologie und/oder das Volumen unter der Topologie berechnet werden. Ist die Dichte des Objekts bekannt, kann auch das Gewicht des Volumens berechnet werden. Wenn sich das Objekt bewegt, kann das bewegte Volumen pro Zeiteinheit bestimmt werden und so auf den Füllstand in einem Behälter geschlossen werden. Beispielsweise kann mittels Integrationsrechnung das bewegte Volumen pro Zeiteinheit bestimmt werden. Dabei kann die Bewegungsgeschwindigkeit des Objektes berücksichtigt werden. Außerdem mag es möglich sein, die Bewegungsgeschwindigkeit des Objektes mittels der Steuereinrichtung so zu steuern, dass ein gutes Integrationsergebnis erzielt werden kann. Die Bezugsfläche kann auch beliebig festgelegt werden.

Die Messvorrichtung mag eine Eingabeeinrichtung aufweisen, mit der ein Parameter, wie beispielsweise die Dichte des Objektes, eingegeben werden kann, beispielsweise die Dichte eines Schüttgutes. Ferner mag es möglich sein, eine Rastergröße einzugeben, die den Abstand zwischen zwei Abtaststellen in lateraler Richtung und/oder in Bewegungsrichtung des Objektes festlegt.

Eine Messvorrichtung zum Erfassen von Eigenschaften eines Objektes mag folglich die Erfassung eines Volumens und/oder einer Masse ermöglichen, welches/welche in industriellen Umgebungen automatisiert in einer Objektführungseinrichtung oder über eine Förderstrecke, beispielsweise ein Förderband, von einem Ursprungsort an einen Zielort bewegt wird. Als Objektführungseinrichtung oder Förderstrecke mag im Rahmen des vorliegenden Textes außer einem Förderband auch eine andere Realisierung in Frage kommen, die geeignet ist, ein Objekt von einem Ursprungsort hin zu einem Zielort entlang auf einer Bezugsebene zu bewegen. Die Messvorrichtung mag auch für Objekte geeignet sein, die sich selbst auf einer Bezugsebene innerhalb der Objektführungseinrichtung bewegen.

Das Objekt mag ein Schüttgut sein, welches eine zufällige Oberflächenstruktur aus Bergen und Tälern aufweist. Die Oberflächenstruktur kann wellenförmig sein. Wird anstelle eines Schüttgutes eine Förderstrecke von einzelnen Objekten besetzt, so kann die Messvorrichtung dazu genutzt werden, diese Objekte zu erfassen, zu zählen und/oder deren Abmessung zu bestimmen. Die Messvorrichtung kann beispielsweise in der Fabrikautomation, aber auch in der Logistik genutzt werden, z.B. in Postverteilzentren oder in Flughäfen.

Da unter einer Objektführungseinrichtung jegliche Art von Förderstrecke verstanden werden kann, die geeignet ist, Massen oder Objekte von einem Ursprungsort an einen Zielort zu bewegen, kann die Messvorrichtung auch im Rahmen der Verkehrsüberwachung genutzt werden, z.B. bei der Klassifizierung und beim Zählen von Fahrzeugen, sowohl im Straßenverkehr als auch im Bahn- und Schiffsverkehr. Allgemein lässt sich mit der Messvorrichtung ein vorgebbarer Bereich überwachen.

Die Objektführungseinrichtung mag für eine Eingrenzung des Bereiches dienen, in dem sich ein Objekt bewegen kann. Bei dem Einsatz eines Förderbandes ist die Begrenzung durch die Seiten des Förderbandes vorgegeben, da über die Seiten des Förderbandes reichende Objekte nicht transportiert werden können. Insbesondere im Falle von sich selbst bewegenden Objekten, wie Personen oder Autos, mag der begrenzte Bereich durch Barrieren oder Leitplanken bestimmt werden, innerhalb dessen sich die Objekte ausbreiten und fortbewegen können.

Die Begrenzung mag es ermöglichen, die Überwachung auf einen beschränkten Bereich zu reduzieren, der mittels des Sendesignals und/oder Empfangssignals untersucht oder abgetastet wird. Im Wesentlichen mag dieser Bereich eine in ihrer Länge begrenzte Gerade sein, die mittels des Sendesignals und/oder des Empfangssignals ausgeleuchtet oder abgetastet wird. Durch physikalische Effekte mag es jedoch nicht immer möglich sein, genau den linienförmigen Bereich zu erfassen, weshalb eine algorithmische Aufbereitung des Empfangssignals stattfindet. Die Steuereinrichtung mag eingerichtet sein, die Bereichsgrenzen des linienförmigen Bereichs zu erkennen und das Objekt innerhalb des Bereichs zu vermessen.

Das ausgesendete Sendesignal mag ein Radarsignal sein. Dieses Radarsignal kann kontinuierlich, gepulst oder als FMCW-Radarsignal (Frequency Modulated Continuous Wave Radar) ausgesendet werden. Durch physikalische Strahlformung mittels Linsen oder Spiegeln, wie beispielsweise mittels einer Parabolantenne, oder auch durch digitale Strahlformung kann das Sendesignal und/oder das Empfangssignal auf den linienförmigen Bereich ausgerichtet werden, um eine möglichst schmale Zeitscheibe in Bewegungsrichtung zu erfassen. So mag sich die Oberflächenstruktur des Objektes in schmalen Scheiben scannen lassen. Durch die Auswertung der von dem Objekt stammenden Reflexionen lässt sich die Objektstruktur bestimmen, die das sich im Moment der Reflexion durch den linienförmigen begrenzten Bereich bewegende Objekt aufweist. Bei der digitalen Strahlformung wird die Strahlformung durch mathematische Algorithmik oder mathematische Verfahren erreicht, beispielweise bei der Auswertung des Empfangssignals, d.h. bei der Nachverarbeitung des Empfangssignals.

Bei dem Objekt kann es sich um einen starren Körper oder um ein Schüttgut handeln. Bei einem Schüttgut kommt es zu im Wesentlichen zufälligen Anhäufungen der Bestandteile des Objekts, welche sich beispielsweise durch Schüttkegel, Agglomerationen, Verklumpung oder Zusammenbacken der Bestandteile des Schüttgutes durch höhere Temperaturen in einer Prozesskette ergeben. Agglomerationen können sich durch vorhandene Restfeuchte oder chemische Reaktion ergeben. Durch diese Anhäufungen mag eine Topologie des Objektes entstehen, d.h. das zu erfassende Objekt mag eine entsprechende Topologie aufweisen. Das Auswerten der Ursache für das Anhäufen kann eine Vorhersage über die Position oder Struktur der Oberfläche erlauben und in die Berechnung des Volumens einfließen.

Im Wesentlichen mag sich der Verlauf der Topologie des Objektes zu einem bestimmten Zeitpunkt durch die linienförmige Abtastung mittels des Sendesignals und Empfangssignals ermitteln lassen. Durch diese Abtastung oder durch das Abscannen mag sich ein Höhenverlauf des Objektes zu dem Messzeitpunkt entlang der Linie bestimmen lassen. Wenn die Bezugshöhe oder Bezugsebene bekannt ist, d.h. wenn die Lage der Ebenen, auf der sich das Objekt befindet bekannt ist, mag sich das Volumen des Objekts zu dem Messzeitpunkt und somit die Menge oder Masse des Objektes bestimmen lassen. Ist auch noch die Dichte des Objektes bekannt, kann das Gewicht des Objektes zum Messzeitpunkt ermittelt werden. Werden diese Messungen innerhalb eines Zeitintervalls in regelmäßigen Abständen wiederholt, kann die Menge des innerhalb dieses Zeitintervalls transportierten Objektes ermittelt werden.

Gemäß einem weiteren Aspekt der vorliegenden Erfindung sind die Sendeeinrichtung und die zumindest zwei Empfangseinrichtungen in der selben Ebene in einem vorgebbaren Abstand gegenüber der Objektführungseinrichtung angeordnet. In einem Beispiel mag die Ebene, auf der die Sendeeinrichtung und die zumindest zwei Empfangseinrichtungen angeordnet sind, rechtwinklig gegenüber der Objektführungseinrichtung angeordnet sein. In einem anderen Beispiel mag die Ebene der Sendeeinrichtung und der Empfangseinrichtung parallel zu einer Ebene der Objektführungseinrichtung liegen, auf der das Objekt transportiert wird, und/oder parallel zu einer Oberfläche, die von einer Markierungseinrichtung gebildet wird.

In einem Beispiel weist die Messvorrichtung zumindest eine zweite Sendeeinrichtung auf. Die zumindest eine zweite Sendeeinrichtung ist in der selben Ebene wie die erste Sendeeinrichtung angeordnet.

Gemäß noch einem anderen Aspekt der Erfindung mag die Sendeeinrichtung und die Empfangseinrichtungen oder mögen die Sendeeinrichtungen und die Empfangseinrichtungen linienförmig angeordnet sein.

Durch die endliche Ausdehnung der Sendeeinrichtungen und/oder der Empfangseinrichtungen mögen diese in einer Ebene liegen, jedoch linienförmig in dieser Ebene angeordnet sein.

Das linienförmige Ausrichten sowohl der Sendeeinrichtungen als auch der Empfangseinrichtung mag eine Fokussierung des Sendesignals und/oder des Empfangssignals entlang der linienförmigen Ausdehnung der Antenne senkrecht zu der Bewegungsrichtung des Objektes ermöglichen. Die Richtung, die im Wesentlichen senkrecht zu der Bewegungsrichtung des Objektes verläuft mag als laterale Richtung bezeichnet werden. Außer dem linienförmigen Anordnen der zumindest zwei Empfangseinrichtungen und/oder der Sendeeinrichtungen, mag jede Form der Anordnung möglich sein. Beispielweise mögen die zumindest zwei Empfangseinrichtungen halbkreisförmig angeordnet sein. Es mag jedoch nötig sein, die Lage der einzelnen Empfangseinrichtungen zueinander zu kennen, um die Lage bei der Auswertung der Empfangssignale berücksichtigen zu können. Die linienförmige Anordnung der zumindest zwei Empfangseinrichtungen mag jedoch bei der Auswertung eines linienförmigen Bereichs die nötigen Rechenschritte reduzieren.

In einem Beispiel mögen die Empfangseinrichtungen symmetrisch um die Sendeeinrichtung oder um die Sendeeinrichtungen angeordnet sein.

In einem anderen Beispiel mag die Sendeeinrichtung im Schwerpunkt der Linie angeordnet sein und die Empfangseinrichtungen mögen in Richtung der Begrenzungen der Linie angeordnet sein. Durch solch eine Anordnung mag eine Strahlformung in lateraler Richtung erzielbar sein, also rechtwinklig zu einer Objektbewegungsrichtung. Die Sendeeinrichtungen können äquidistant zueinander in einem zentralen Bereich angeordnet sein. Die Empfangseinrichtungen können auch äquidistant zueinander angeordnet sein. Um den Eindeutigkeitsbereich auf einen Winkel von 90° einzuschränken mag in einem Beispiel der Abstand der Empfangseinrichtungen zueinander kleiner als die halbe Wellenlänge des benutzten Radar-Signales sein. Ein Eindeutigkeitsbereich mag dabei einen Bereich beschreiben, in dem das berechnete Empfangssignal eindeutig einem Winkel zuordenbar ist, d.h. dass keine Mehrdeutigkeiten auftreten.

In einem anderen Beispiel mögen Empfangselemente aber auch statistisch entlang der Ausdehnung der Linie verteilt sein, ohne einer speziellen lokalen Beziehung untereinander. Allerdings sollte der Abstand der Empfangselemente untereinander bekannt sein, um eine Bestimmung der Topologie zu ermöglichen.

Gemäß einem weiteren Aspekt der vorliegenden Erfindung weist die Messvorrichtung eine Objektführungseinrichtung auf. Die Objektführungseinrichtung ist eingerichtet, eine Bewegung des Objektes auf den Bereich innerhalb der Breite (B) zu begrenzen.

Durch das Kombinieren der Messvorrichtung mit der Objektführungseinrichtung kann die Messvorrichtung an die Dimensionen der Objektführungseinrichtung angepasst werden. So mag sich der Empfangswinkelbereich fest in der Messvorrichtung einstellen lassen und einen vorgegebenen linienförmigen Bereich innerhalb der Breite der Objektführungseinrichtung erfassen. So kann ein Messsytem geschaffen werden, dessen Komponenten aufeinander abgestimmt sind.

Gemäß einem weiteren Aspekt der vorliegenden Erfindung mögen die zumindest zwei Empfangseinrichtungen und die Sendeeinrichtung oder die Sendeeinrichtungen innerhalb eines Bereiches der Breite der Objektführungseinrichtung angeordnet sein.

Die Breite über die die Sendeeinrichtungen und/oder die Empfangseinrichtungen angeordnet sind, mag an die Breite der Objektführeinrichtung angepasst sein. So mag die Breite der Objektführungseinrichtung gut von der Sendeeinrichtung und/oder der Empfangseinrichtung erfassbar sein. Die Breite des linienförmigen Bereichs kann mittels Einstellen des Winkels für die Hauptstrahlrichtung und/oder die Empfangsrichtung zusätzlich angepasst werden. Die Breite, über die die Sendeeinrichtungen und/oder die Empfangseinrichtungen angeordnet sind, kann genauso groß sein, wie die Breite der Objektführungseinheit. Die Breite, über die die Sendeeinrichtungen und/oder die Empfangseinrichtungen angeordnet sind, kann auch kleiner oder größer sein als die Breite der Objektführungseinheit. Die Sendeeinrichtung und/oder die zumindest zwei Empfangseinrichtungen mögen ein lineares Array bilden. Dieses lineare Array mag in einem Beispiel als Breite genau die Breite der Objektführungseinrichtung aufweisen. In einem anderen Beispiel mag die Breite des linearen Array kleiner oder größer als die Breite der Objektführungseinrichtung sein. Die Breite des linearen Array beträgt in einem Beispiel 20 cm.

Gemäß noch einem anderen Aspekt der vorliegenden Erfindung weist die Objektführungseinrichtung eine Markierung auf, um eine Bezugsebene festzulegen.

Vibrationen mögen für eine Bewegung der Objektführungseinrichtung sorgen. Dabei könnte das Messergebnis der Objekttopologie verfälscht werden, da sich beispielsweise nicht die Höhe des Objektes sondern die Lage der Objektführungseinrichtung ändert. Weist die Objektführungseinrichtung jedoch eine Markierung oder Markierungseinrichtung auf, die die augenblickliche Lage der Objektführungseinrichtung zu der Sendeeinrichtung und/oder zu den Empfangseinrichtungen in dem Messzeitpunkt angibt, kann die ermittelte Struktur korrigiert werden. Eine solche Korrektur kann in der Steuereinrichtung erfolgen.

Die Messvorrichtung mag eingerichtet sein, die Markierung zu erkennen und anhand der Lage der Markierung störende mechanische Einflüsse aus dem Messergebnis zu entfernen. Die Messvorrichtung mag für die Erkennung der Markierung eine Markierungserkennungseinrichtung aufweisen.

Gemäß einem weiteren Aspekt der vorliegenden Erfindung ist die Messvorrichtung eingerichtet, die Hauptstrahlrichtung der Sendeeinrichtungen und/oder die Hauptempfangsrichtung der Empfangseinrichtungen zu verändern.

Das Verändern der Hauptstrahlrichtung und/oder der Hauptempfangsrichtung mag der Erfassung der Signale entlang des linienförmigen Bereiches dienen und somit der Erfassung der Struktur oder Topologie der Oberfläche im entsprechenden Bereich. Durch das Nutzen unterschiedlicher Hauptempfangsrichtungen können kleine Abtastflächen aus dem linienförmigen Bereich extrahiert werden, für die die jeweilige Höhe und das zugehörige Volumen bestimmt wird. Insbesondere mag ein Winkelbereich vorgebbar sein, in den sich der linienförmige Bereich einteilen lässt. Die Auswertung der Hauptstrahlrichtungen mag in der Nachverarbeitung erfolgen. Insbesondere mag die Veränderung der Hauptempfangsrichtung die gezielte Auswertung eines Abschnittes des linienförmigen Bereichs ermöglichen.

Gemäß noch einem anderen Aspekt der vorliegenden Erfindung wird zum Verändern der Hauptempfangsrichtung der Empfangseinrichtung ein Verfahren der digitalen Strahlformung genutzt. Insbesondere wird das Verändern der Hauptempfangsrichtung genutzt, um den linienförmigen Bereich in lateraler Richtung zu analysieren. Beispielsweise lässt sich der laterale Bereich in kleine Abtastflächen zerlegen, deren Maße den Winkeln der Empfangsrichtungen entsprechen.

Zusätzlich zum Analysieren in lateraler Richtung kann eine Fokussierung in Bewegungsrichtung durchgeführt werden. Die Fokussierung mag der Eingrenzung auf einen möglichst schmalen Bereich in Bewegungsrichtung dienen. Zum Fokussieren kann eine physikalische Fokussierungseinrichtung und/oder ein mathematisches Berechnungsverfahren genutzt werden. Als Berechnungsverfahren kann beispielsweise ein SAR Algorithmus (Synthetic Aperture Radar Algorithmus) zur Fokussierung eingesetzt werden. Zusätzlich oder alternativ kann als physikalische Fokussiereinrichtung eine Linse oder Antenne genutzt werden, beispielsweise eine Parabolrinne.

In anderen Worten mag durch die Fokussiereinrichtung der linienförmige Bereich in Bewegungsrichtung verschmälert werden und durch Verändern der Hauptstrahlrichtung und/oder der Hauptempfangsrichtung mag sich der verschmälerte Bereich in lateraler Richtung, also senkrecht zu der Bewegungsrichtung, untersuchen lassen. Durch die Veränderung der Hauptempfangsrichtung mag sich im Wesentlichen das Ausmaß der Breite begrenzen lassen, also die Länge des linienförmigen Bereichs festlegen lassen. Durch das Verändern der Hauptempfangsrichtung mögen sich unterschiedliche Abschnitte des linienförmigen Bereichs untersuchen lassen, die den jeweiligen Winkeln zugeordnet sind. Außerdem mag sich durch das Verändern der Hauptempfangsrichtung die Länge des linienförmigen Bereichs auf die Breite der Objektführungseinrichtung und/oder einer entsprechend zugeordneten Markierungseinrichtung begrenzen lassen. Durch das Fokussieren kann ein möglichst schmaler Bereich der Oberflächenstruktur des Objekts vermessen werden und eine schmale Zeitscheibe erzeugt werden. Durch das Vorsehen von kleinen Winkelbereichen der Hauptempfangseinrichtung mag sich eine weitere Verkleinerung der Abtastfläche erreichen lassen.

Es mag sich also je nach Bedarf eine mathematische und/oder physikalische Strahlformung anwenden lassen.

Gemäß noch einem anderen Aspekt der vorliegenden Erfindung mag die Objektführungseinrichtung eine Einrichtung sein, welche aus der Gruppe der Einrichtungen ausgewählt ist, bestehend aus einem Förderband, einer Rütteleinrichtung und einer Fahrbahn.

Sämtliche dieser Einrichtungen können für einen Transport des Objektes in eine vorgegebene Richtung und für eine örtliche Begrenzung des Objektes während des Transportes sorgen. Ebenso weisen diese Objektführungseinrichtungen jeweils eine Bezugsebene auf, auf der sich das Objekt bewegt.

Gemäß einem anderen Aspekt der vorliegenden Erfindung weist die Messvorrichtung weiter eine Geschwindigkeitsmesseinrichtung auf, wobei die Geschwindigkeitsmesseinrichtung eingerichtet ist, eine Bewegungsgeschwindigkeit des Objektes zu ermitteln.

Bei Kenntnis der Bewegungsgeschwindigkeit des Objektes mag ein transportiertes Volumen oder transportiertes Gewicht des Objektes innerhalb eines Zeitintervalls ermittelbar sein. Die Geschwindigkeitsmesseinrichtung mag als Drehgeber und/oder als Geschwindigkeitsradar ausgebildet sein. Auch mag eine Beeinflussung der Bewegungsgeschwindigkeit des Objektes durchführbar sein.

Gemäß einem anderen Aspekt ist das transportierte Objekt ein Schüttgut, ein Fahrzeug und/oder eine Person.

Gemäß noch einem anderen Aspekt der vorliegenden Erfindung ist die Steuereinrichtung eingerichtet, die Topologie des Objekts zu ermitteln und aus der Topologie das Volumen und/oder die Masse des Objekts zu bestimmen.

Die Bestimmung der Topologie mag ohne Einsatz einer Waage möglich sein. Somit lässt sich der Einbau in Auflagerpunkte einer Objektführungseinrichtung vermeiden. Daher mag eine Messvorrichtung, die eine Bestimmung der Topologie des Objektes nutzt, leicht nachrüstbar sein.

Gemäß einem weiteren Aspekt der vorliegenden Erfindung ist die Messvorrichtung als Zweileitersystem ausgebildet.

Das Zweileitersystem mag ein 4...20 mA Signal nutzen. Ein Zweileitersystem mag seine für den Betrieb der Messvorrichtung nötige Energie, insbesondere seine für den Betrieb der Steuereinrichtung, des Sensors, des Arrays, der Sendeeinrichtung und/oder der Empfangseinrichtung benötigte Energie, ausschließlich über eine Zweileiterverbindung beziehen. Die Zweileiterleitung mag ferner zur Kommunikation, insbesondere zur Ausgabe zumindest eines Messwertes oder eines daraus abgeleiteten Messwertes, wie z.B. der Topologiekurve, der Masse im Behälter oder des transportierten Volumens, ausgeführt sein. Die Zweileiterleitung mag eine bidirektionale Kommunikation ermöglichen und gleichzeitig für die Energieversorgung der Messvorrichtung sorgen, insbesondere für die aktiven Komponenten der Messvorrichtung.

Durch das Ausführen der Messvorrichtung als Zweileitersystem kann die Energiezufuhr über die gleichen physikalischen Leitungen erfolgen, wie die Bereitstellung von Messergebnissen. Zur Datenübertragung kann ein Protokoll nach dem HART® Standard genutzt werden oder ein 4 ... 20 mA Signal. Die Messgerätevorrichtung mag eine Messgeräteschnittstelle aufweisen, die aus der Gruppe von Messgeräteschnittstellen ausgewählt ist, wobei die Gruppe aus einer I²C Schnittstelle, einer HART® Schnittstelle und einer 4...20mA Schnittstelle oder einer 4 bis 20 mA Schnittstelle besteht.

Das HART® Protokoll (Highway Addressable Remote Transducer), das eine HART® Schnittstelle nutzt, kann insbesondere als ein offenes Master-Slave-Protokoll für Bus-adressierbare Feldgeräte bezeichnet werden. Es kann eine Methode implementieren, Daten mittels Frequency Shift Keying (FSK), aufgesetzt auf dem 4 bis 20 mA Prozesssignal, zu übertragen, um Fernkonfiguration und Diagnoseprüfung zu ermöglichen. Das HART® Protokoll oder eine entsprechende HART® Schnittstelle kann auch genutzt werden, um Rohdaten zu übertragen. Die 4 bis 20 mA Schnittstelle bzw. die HART® Schnittstelle ist eine Hardwareschnittstelle, wobei die 4 bis 20mA-Schnittstelle eine analoge Schnittstelle ist, die durch das Anwenden des HART®-Protokolls und dessen physikalische Komponenten oder Hardware befähigt wird digitale Daten zu übertragen.

An der Messgeräteschnittstelle kann entweder ein aufbereiteter Messwert in Form des Gewichts pro Zeiteinheit oder des Volumens pro Zeiteinheit bereitgestellt werden oder eine Kurve, die die Struktur der Oberfläche des Objekts oder die Topologie des Objektes angibt. Diese Topologiekurve oder Oberflächenkurve mag einen Höhenverlauf entlang des linienförmigen Bereichs angeben. Die Topologiekurve mag mittels Laufzeitmessungen an verschiedenen Stellen entlang des linienförmigen Bereichs oder unter unterschiedlichen Winkeln entlang des linienförmigen Bereichs in lateraler Richtung ermittelt werden. Eine Laufzeitmessung mag beispielsweise mittels der Messung einer Laufzeit einer Radarwelle, vom Aussendezeitpunkt bis zum Empfangszeitpunkt, durchgeführt werden. In einem Beispiel mögen die Höhenverläufe der Topologiekurve ermittelt werden, indem die Echokurven der einzelnen Empfangseinheiten oder der einzelnen Eompfangseinrichtungen unter unterschiedlichen Winkeln ausgewertet werden. Bei der Topologiekurve selbst mag es sich jedoch nicht um eine Echokurve handeln. Die Auswertung kann direkt auf der Messvorrichtung erfolgen. Es mag aber auch möglich sein die Auswertung auf ein externes Auswertegerät auszulagern, dem nur die Rohdaten zur Verfügung gestellt werden. Das Auslagern auf ein externes Gerät mag den Energiebedarf der Messvorrichtung reduzieren, was insbesondere für Zweileitersysteme ein gutes Energiemanagement ermöglicht.

Die Sendeeinrichtung und/oder die zumindest zwei Empfangseinrichtungen mögen ein Teil eines Sensors sein, der die empfangenen Signale in der Form einer Echokurve bereitstellt. Aus diesen empfangenen Signalen mag die Topologiekurve ermittelt werden. Der Sensor wiederum mag ein Teil eines Feldgeräts sein oder selbst als Feldgerät bezeichnet werden. Die Messvorrichtung mag das Feldgerät oder der Sensor und eine Auswerteeinrichtung aufweisen. Die Auswerteeinrichtung mag als externes Gerät ausgeführt sein, das über eine der Messgeräteschnittstellen, beispielsweise über eine Zweileiterschnittstelle, eine Control Loop oder eine Zweidrahtleitung, mit dem Feldgerät und/oder mit der Messvorrichtung kommuniziert. Die Auswerteeinrichtung mag in einem anderen Beispiel in das Feldgerät integriert sein. Beispielsweise mag die Auswerteeinrichtung auf das Feldgerät aufschraubbar sein und den Messwert direkt an der Messvorrichtung bereitstellen, beispielsweise das Volumen oder das Gewicht pro Zeiteinheit oder entsprechend akkumulierte Werte. Ferner kann ein berechneter Messwert empfangen werden und dargestellt werden.

Es soll angemerkt werden, dass unterschiedliche Aspekte der Erfindung mit Bezug auf unterschiedliche Gegenstände beschrieben wurden. Insbesondere wurden einige Aspekte mit Bezug auf Vorrichtungsansprüche beschrieben, wohingegen andere Aspekte mit Bezug auf Verfahrensansprüche beschrieben wurden. Ein Fachmann kann jedoch der vorangehenden Beschreibung und der folgenden Beschreibung entnehmen, dass, außer es wird anders beschrieben, zusätzlich zu jeder Kombination von Merkmalen, die zu einer Kategorie von Gegenständen gehört, auch jede Kombination zwischen Merkmalen als von dem Text offenbart angesehen wird, die sich auf unterschiedliche Kategorien von Gegenständen bezieht. Insbesondere soll auch eine Kombination zwischen Merkmalen von Vorrichtungsansprüchen und Merkmalen von Verfahrensansprüchen offenbart sein.

### Kurze Beschreibung der Figuren

Im Folgenden werden weitere exemplarische Ausführungsbeispiele der vorliegenden Erfindung mit Verweis auf die Figuren beschrieben.
Fig. 1 zeigt eine Förderstrecke zum besseren Verständnis der vorliegenden Erfindung.
Fig. 1a zeigt eine Aufsicht auf die Förderstrecke aus Fig. 1 zum besseren Verständnis der vorliegenden Erfindung.
Fig. 2 zeigt eine Förderstrecke mit einer integrierten Bandwaage zum besseren Verständnis der Erfindung.
Fig. 3 zeigt eine Förderstrecke mit einem radiometrischen Sensor zum besseren Verständnis der Erfindung.
Fig. 4a zeigt eine Frontansicht einer Förderstrecke mit einem Sensor zur Bestimmung einer Oberflächenstruktur eines Objektes mittels Laserstrahlung zum besseren Verständnis der vorliegenden Erfindung.
Fig. 4b zeigt eine Seitenansicht einer Förderstrecke mit einem Sensor zur Bestimmung einer Oberflächenstruktur eines Objektes mittels Laserstrahlung zum besseren Verständnis der vorliegenden Erfindung.
Fig. 5a zeigt eine Frontansicht einer Förderstrecke mit einem Sensor zur Bestimmung einer Oberflächenstruktur eines Objektes mittels Radarstrahlen gemäß einem exemplarischen Ausführungsbeispiel der vorliegenden Erfindung.
Fig. 5b zeigt eine Seitenansicht einer Förderstrecke mit einem Sensor zur Bestimmung einer Oberflächenstruktur eines Objektes mittels Radarstrahlen gemäß einem exemplarischen Ausführungsbeispiel der vorliegenden Erfindung.
Fig. 5c zeigt einen Ausschnitt einer Aufsicht einer Förderstrecke nach Fig. 5a, 5b gemäß einem exemplarischen Ausführungsbeispiel der vorliegenden Erfindung
Fig. 6a zeigt eine Frontansicht einer Förderstrecke mit einem weiteren Sensor zur Bestimmung einer Oberflächenstruktur eines Objektes mittels Radarstrahlen gemäß einem exemplarischen Ausführungsbeispiel der vorliegenden Erfindung.
Fig. 6b zeigt eine Seitenansicht einer Förderstrecke mit einem weiteren Sensor zur Bestimmung einer Oberflächenstruktur eines Objektes mittels Radarstrahlen gemäß einem exemplarischen Ausführungsbeispiel der vorliegenden Erfindung.
Fig. 6c zeigt einen Ausschnitt einer Aufsicht einer Förderstrecke nach Fig. 6a, 6b gemäß einem weiteren exemplarischen Ausführungsbeispiel der vorliegenden Erfindung
Die Fig. 7 zeigt eine Messvorrichtung mit einer Markierung gemäß einem exemplarischen Ausführungsbeispiel der vorliegenden Erfindung.
Fig. 8 zeigt eine Messvorrichtung zur Ermittlung der Geschwindigkeit der Förderstrecke gemäß einem exemplarischen Ausführungsbeispiel der vorliegenden Erfindung.
Die Fig. 9 zeigt ein Flussdiagramm für ein Verfahren zum Erfassen von Eigenschaften eines Objektes gemäß einem exemplarischen Ausführungsbeispiel der vorliegenden Erfindung.

### Detaillierte Beschreibung von Ausführungsbeispielen

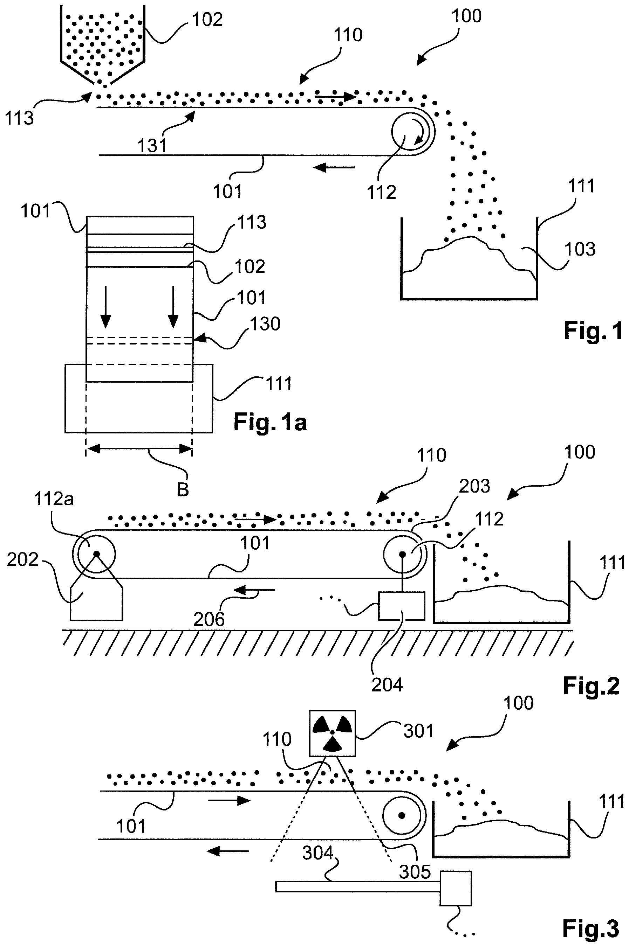

Die Darstellungen in den Figuren sind schematisch und nicht maßstäblich. In der folgenden Beschreibung der Fig. 1 bis 9 werden die gleichen Bezugsziffern für gleiche oder sich entsprechende Elemente verwendet.

Fig. 1 zeigt eine Förderstrecke 100 zum besseren Verständnis der vorliegenden Erfindung. Das gezeigte Förderband 101, das als Objektführungseinrichtung 101 genutzt wird, transportiert ein Objekt 110 oder Medium 110, beispielsweise ein Schüttgut 110 wie Kies 110, von einem Ursprungsort, beispielsweise einer Objektzufuhreinrichtung 102, wie einem Silo 102, zu einer Objektsammeleinrichtung 111 an einem Zielort 103, beispielsweise einem Behälter 111. Die Förderstecke 100 kann lediglich die Objektführungseinrichtung 101 aufweisen. Optional kann die Förderstrecke 100 auch die Objektzufuhreinrichtung 102 und/oder die Objektsammeleinrichtung 111 aufweisen. Die Objektführungseinrichtung 101 ist zum Führen eines Objektes in eine vorgebbare Richtung eingerichtet. Das Objekt 110 liegt auf einer Bezugsebene 131, die in Fig. 1 von dem Transportband des Förderbandes 101 gebildet wird.

Das Objekt 110 mag sich, um von dem Ursprungsort zu dem Zielort zu gelangen, selbst innerhalb der Objektführungseinrichtung 101 bewegen oder von der Objektführungseinrichtung 101 aktiv bewegt werden. Die Bewegungsrichtung ist in Fig. 1 durch Pfeile angedeutet. Durch die Umlenkung mittels der Umlenkrolle 112 oder Rad 112 erfolgt die Bewegung des Förderbandes auf der Seite, auf der das Objekt 110 liegt, in der Bewegungsrichtung des Objektes 110, und auf der entgegensetzten Seite in entgegengesetzte Richtung. Die Bewegungsrichtung des Objektes 110 ist vom Ursprungsort zum Zielort gerichtet. Die Rückwärtsbewegung mag ausgeschlossen sein. Die Bewegung des Objektes 110 erfolgt mit einer vorgebbaren Geschwindigkeit. Die Umlenkrolle 112 mag angetrieben sein und erzeugt die Bewegung der Objektführungseinrichtung 101. Der Antrieb mag aber in anderen Ausführungsbeispielen auch auf andere Art und Weise erfolgen.

Fig. 1a zeigt eine Aufsicht auf die Förderstrecke 100 aus Fig. 1 zum besseren Verständnis der vorliegenden Erfindung. Zur vereinfachten Darstellung ist in Fig. 1a kein Objekt 110 gezeichnet, das von der Förderstrecke transportiert wird. Am Ursprungsort kann das Objekt 110 durch den Schlitz 113 in dem Silo 102 auf die Objektführungseinrichtung 101 fallen. Durch die Breite B der Objektführungseinrichtung 101 wird der Bereich vorgegeben, auf dem sich ein Objekt 110 befinden kann. Zur Begrenzung der Breite B kann die Objektführungseinrichtung 101 Begrenzungen, Erhöhungen oder Barrieren (nicht gezeigt in Fig. 1 oder Fig. 1a) aufweisen, die im Wesentlichen sicherstellen, dass sich ein Objekt 110 innerhalb der Breite B auf der Objektführungseinrichtung 101 befindet. In Fig. 1, 1a wird die Begrenzung durch die Ausmaße der Objektführungseinrichtung 101 erreicht, d.h. alle Objekte, die außerhalb des Bereichs B fallen, fallen neben die Objektführungseinrichtung 101 und können nicht transportiert werden, so dass die Objektführungseinrichtung für eine seitliche Begrenzung des Bereiches sorgt, auf dem ein Objekt transportiert werden kann. Die laterale Richtung liegt im Wesentlichen senkrecht zu der Bewegungsrichtung der Objektführungseinrichtung 101. Folglich verläuft die laterale Richtung senkrecht zu den dargestellten Pfeilrichtungen. Die Breite B der Objektführungseinrichtung 101 erstreckt sich im Wesentlichen in lateraler Richtung. Die Fig. 1a zeigt auch einen linienförmigen Bereich 130 auf der Objektführungseinrichtung 101, entlang dessen ein Objekt (nicht dargestellt in Fig. 1a) analysiert werden kann. Insbesondere kann eine Erhebung der Oberfläche des Objektes 110 entlang des linienförmigen Bereichs 130 über der Bezugsebene 131 analysiert werden und das Höhenprofil kann bereitgestellt werden.

Es mag sich die Aufgabe stellen, die Masse und/oder das Volumen des von der Fördereinrichtung 101, insbesondere von der Objektführungseinrichtung 101 bewegten Materials zu bestimmen.

Fig. 2 zeigt eine Fördereinrichtung 100 oder Förderstrecke 100 mit einer integrierten Bandwaage 204 zum besseren Verständnis der Erfindung. Die Förderstrecke 100 weist die Objektführungseinrichtung 101 und die beiden Umlenkrollen 112, 112a auf. Die Objektführungseinrichtung 101 ist an einem Auflagerpunkt 202 drehbar gelagert. An einem zweiten Auflagerpunkt 203 wird mit Hilfe einer Waage 204 die aktuell von der Objektführungseinrichtung 101 und dem geförderten Objekt 110 ausgeübte Gewichtskraft fortlaufend erfasst. Unter Verwendung der geometrischen Abmessungen und der Konstruktionsdaten der Objektführungseinrichtung 101 ist es möglich, die aktuell auf dem Förderband befindliche Masse des Objektes 110 zu bestimmen. Ist zudem über einen (in Figur 2 nicht dargestellten) Drehgeber, der sich in der Umlenkrolle 112 oder in der Umlenkrolle 112a befindet, die Geschwindigkeit der Objektführungseinrichtung 101 in Bewegungsrichtung 206 bekannt, lässt sich die in einem bestimmten Zeitraum oder in einer bestimmten Zeiteinheit von der Fördereinrichtung 100 in einen Behälter 111 geförderte Menge des Objektes oder die entsprechende Menge an Material bestimmen. Ist zudem die Dichte des Materials des Objektes 110 bekannt, kann auch das geförderte Volumen in einem interessierenden Zeitraum bestimmt werden.

Die Überwachung von Förderanlagen mit Hilfe von Bandwaagen 204 kann dazu führen, dass betriebsbedingte Schwingungen oder Vibrationen innerhalb der Förderanlage 100 das Messergebnis verfälschen. Zudem muss die Messeinrichtung 204 direkt beim Aufbau der Förderstrecke 100 konstruktiv integriert werden, wodurch ein Nachrüsten von bestehenden Förderanlagen 100 erschwert wird.

Fig. 3 zeigt eine Förderstrecke 100 mit einem radiometrischen Sensor 301, 304 zum besseren Verständnis der Erfindung. Ein radioaktives Präparat 301 durchstrahlt das von der Förderstrecke 100 geförderte Objekt 110. Ein unterhalb des Objekts 110 angeordneter Detektor 304 bestimmt die Absorption der vorab bekannten Ausgangsintensität der radioaktiven Strahlung 305, welche ein Maß für die Dicke, bzw. den Absorptionskoeffizienten des zwischen der Quelle und dem Detektor vorhandenen Mediums ist. Die Messung ist unbeeinflusst von Schwingungen der Förderstrecke, und liefert bei bekannter Dichte und Zusammensetzung des Materials und zusätzlich erfasster Geschwindigkeit des Förderbandes ebenfalls das in einer Zeiteinheit transportierte Volumen. Allerdings erfordert die Messung mittels eines radioaktiven Präparats eine erhöhte Vorsicht, um die Gefährdung von Mensch und Umwelt durch die radioaktive Strahlung zu vermeiden. Daher sind hohe Kosten für entsprechende Sicherheitsvorkehrungen aufzuwenden, wodurch dieses Verfahren teuer wird. Außerdem können Variationen in der Zusammensetzung des Objekts zu Messfehlern führen, die nur schwer korrigiert werden können.

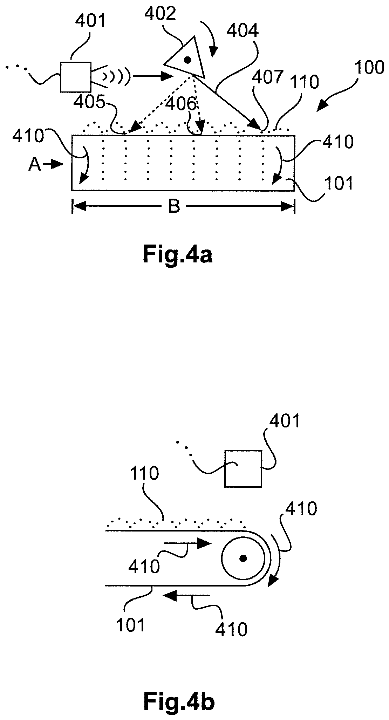

Fig. 4a zeigt eine Frontansicht einer Förderstrecke 100 mit einem Sensor 401, 402 zur Bestimmung einer Oberflächenstruktur eines Objektes 110 mittels Laserstrahlung zum besseren Verständnis der vorliegenden Erfindung. Fig. 4b zeigt eine Seitenansicht in der in Fig. 4a durch den Buchstaben A gekennzeichneten Richtung einer Förderstrecke 100 mit einem Sensor 401, 402 zur Bestimmung einer Oberflächenstruktur eines Objektes mittels Laserstrahlung zum besseren Verständnis der vorliegenden Erfindung. Die Oberfläche des transportierten Mediums 110 oder des transportierten Objektes 110 wird mit Hilfe von Laserstrahlen an unterschiedlichen Stellen 405, 406, 407 abgetastet, wobei zu jeder Stelle jeweils die Entfernung vom Messgerät 401 zur Oberfläche 405, 406, 407 bestimmt wird. Das Messgerät 401 ist durch die Messung der Oberflächen an unterschiedlichen Stellen in der Lage, den Verlauf der Oberfläche zu ermitteln, und bei zusätzlich erfasster Geschwindigkeit der Förderanlage das transportierte Volumen zu berechnen. Um einen linienförmigen Verlauf der Oberfläche in lateraler Richtung zu bestimmen wird der Laserstrahl senkrecht zur Bewegungsrichtung der Objektführungseinrichtung 101 abgelenkt. Die Bewegungsrichtung der Objektführungseinrichtung 101 ist durch die Pfeile 410 in Fig. 4a und 4b dargestellt und stimmt mit der Bewegungsrichtung des Objekts 110 auf der dem Sensor 401, 402 zugewandten Seite überein.

Bei bekannter Dichte des Objektes 110 kann auch die transportierte Masse des Objektes 110 berechnet werden. Allerdings kann die Messung durch Staub beeinflusst werden, der die Ausbreitung des Laserlichtes 404 dämpfen oder sogar ablenken kann. Zudem erfolgt in der Messanordnung nach Fig. 4a und 4b eine mechanische Veränderung der Strahlungsrichtung durch ein mechanisch bewegtes Bauteil 402, was entsprechenden Verschleiß zur Folge haben kann.

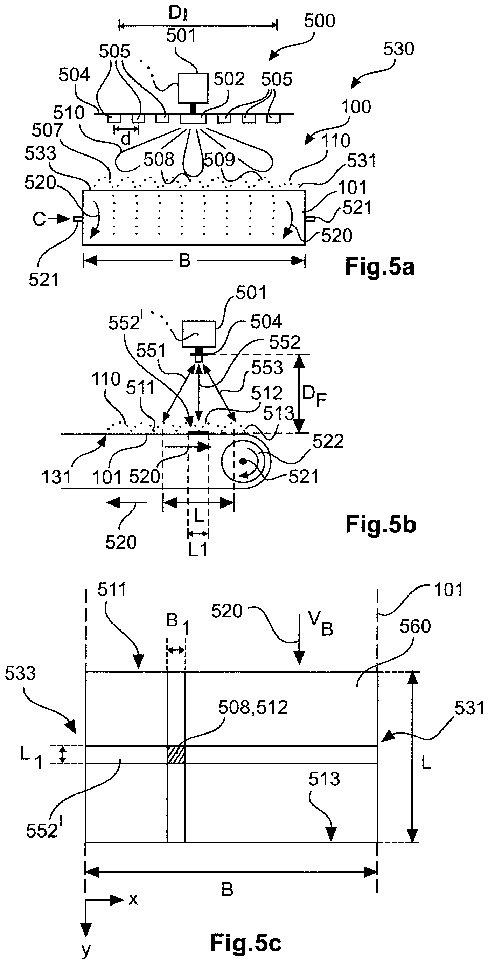

Fig. 5a zeigt eine Frontansicht einer Förderstrecke 100 mit einem Sensor 500 zur Bestimmung einer Oberflächenstruktur eines Objektes 110 mittels Radarstrahlen gemäß einem exemplarischen Ausführungsbeispiel der vorliegenden Erfindung. Fig. 5b zeigt eine Seitenansicht der in der Fig. 5a durch den Buchstaben C gekennzeichneten Richtung einer Förderstrecke 100 mit einem Sensor 500 zur Bestimmung einer Oberflächenstruktur eines Objektes 110 mittels Radarstrahlen gemäß einem exemplarischen Ausführungsbeispiel der vorliegenden Erfindung. Die Messung ist wegen der Verwendung von Radarstrahlen im Wesentlichen unabhängig von Staub.

Die Messvorrichtung 530 weist den Sensor 500 und die Förderstrecke 100 auf. Die Förderstrecke 100 weist die Objektführungseinrichtung 101 und die Umlenkrolle 522 oder das Rad 522 auf. Außerdem kann die Förderstrecke 100 ein Silo 102 und einen Behälter 111 aufweisen (nicht gezeigt in Fig. 5a, 5b). Die Geschwindigkeit des von der Objektführungseinrichtung 101 geführten Objektes 110 entspricht der Geschwindigkeit der Objektführungseinrichtung 101 auf der dem Sensor 500 zugewandten Seite. Die Messvorrichtung 530 kann auch lediglich den Sensor 500 aufweisen und ist unabhängig von der Objektführungseinrichtung betreibbar. Der Sensor 500 kann jedoch auch fest mit der Objektführungseinrichtung 101 verbunden sein.

Mittels einer einzigen Sendeeinrichtung 502 oder mittels zumindest zwei Sendeeinrichtungen 502 wird ein Radarsendestrahl generiert. (Der Sendestrahl ist in Fig. 5a und 5b nicht dargestellt). Der Radarsendestrahl breitet sich entsprechend der Antennencharakteristik in die Richtung der Objektführungseinrichtung 101 aus und wird an der Oberfläche des Objekts 110 reflektiert. An Stellen, an denen kein Objekt vorhanden ist, wird der Radarstrahl von der Objektführungseinrichtung reflektiert, insbesondere von der Bezugsebene 131. Ohne Einschränkung der Allgemeinheit sei für die Beschreibung der Ausführungsbeispiele ein Schüttgut 110 als Objekt 110 angenommen. Das Schüttgut kann die in Fig. 5a beispielhaft dargestellte wellige Oberflächenstruktur in lateraler Richtung über die Breite B haben. Ferner kann das Schüttgut die in Fig. 5b beispielhaft dargestellte wellige Oberflächenstruktur in Bewegungsrichtung haben, wobei sich die Oberflächenstruktur in Bewegungsrichtung von der Oberflächenstruktur in lateraler Richtung unterscheiden mag. Ferner sei ohne Einschränkung der Allgemeinheit ein Förderband als Objektführungseinrichtung 101 bei der Beschreibung der Ausführungsbeispiele angenommen.

Die Messanordnung nach Fig. 5a weist die Steuereinrichtung 501 auf. Die Steuereinrichtung 501 kann die Sendeeinrichtung 502 ansteuern, in der nach dem Radarprinzip ein Radarstrahl erzeugt wird. Dieser Radarstrahl weist eine Frequenz von beispielsweise 79 GHz auf, entsprechend einer Wellenlänge von 3,8 mm. Der Radarstrahl kann kontinuierlich, gepulst oder nach dem FMCW Prinzip erzeugt werden. In Fig. 5a ist nur eine einzige erste Sendeeinrichtung 502 dargestellt. Der Sensor 500 kann jedoch auch zumindest zwei oder eine Vielzahl von Sendeeinrichtungen 502 aufweisen. Wenn der Sensor 500 zumindest zwei Sendeeinrichtungen 502 aufweist, lässt sich die Hauptstrahlrichtung des Sendesignals beeinflussen. So mag sich auch die Antennencharakteristik in Senderichtung beeinflussen lassen. Ohne Einschränkung der allgemeinen Gültigkeit soll jedoch für die Beschreibung der Fig. 5a, 5b, 5c von einer im Wesentlichen punktförmigen oder kugelförmigen Strahlungscharakteristik ausgegangen werden, die zu einem im Wesentlichen rechteckigen oder ovalen Footprint führt.

Von der Sendeinrichtung 502 oder von der Sendeeinheit 502 wird ein Radarsignal als Sendesignal in Richtung des zu überwachenden Mediums 110 oder des zu überwachenden Objektes 110 ausgesendet, von dem die Eigenschaften bestimmt werden sollen. (Das Sendesignal ist in Fig. 5a nicht dargestellt). Die Ausrichtung der Antennencharakteristik der Sendeeinrichtung 520 in Richtung des zu überwachenden Mediums ist beim Aussenden zeitlich konstant und beleuchtet die Fördereinrichtung 100 im Wesentlichen auf der vollen Breite B der Objektführungseinrichtung 101 in lateraler Richtung und über die Länge L in Bewegungsrichtung. Der sich durch das Sendesignal ergebende ausgeleuchtete Bereich 560 oder Footprint 560 ist in Fig. 5c in einer Aufsicht dargestellt.

Die Hauptstrahlrichtung der Antennencharakteristik ist im Wesentlichen senkrecht von der Sendeeinrichtung 502 in Richtung des Objektes 110 gerichtet. Der Footprint ergibt sich entsprechend der Antennencharakteristik.

Als Folge der Bestrahlung der Oberfläche des Mediums 110 mit dem Sendesignal wird das Signal von der Oberfläche des Mediums oder von den bestrahlten Regionen 533, 531 der Fördereinrichtung reflektiert.

Jedes dieser Empfangssignale 510 von den unterschiedlichen Stellen 533, 507, 508, 509, 531 wird von jedem der zumindest zwei Empfangseinrichtungen 505 unter einem anderen Winkel und damit mit einem Phasenversatz zueinander empfangen.

Ebenso wird in der Bewegungsrichtung des Objektes 110 von den unterschiedlichen Stellen 511, 512, 513 ein Empfangssignal reflektiert. Auch jedes dieser Empfangssignale 551, 552, 553 wird von jedem der zumindest zwei Empfangseinrichtungen 505 unter einem anderen Winkel und damit mit einer dem Winkel zur Empfangseinrichtung in Bewegungsrichtung entsprechenden Dopplerverschiebung empfangen.

Die Empfangssignale 533, 507, 508, 509, 531, 551, 552, 553 werden alle von dem selben Sendesignal verursacht. Das Medium 110 reflektiert somit in lateraler Richtung die Signale 510, welche von zumindest zwei Empfangseinrichtungen 505 empfangen werden. Die zumindest zwei Empfangseinrichtungen 505 sind linienförmig entlang einer Linie parallel zu einer Drehachse 521 der Umlenkrolle 522 der Objektführungseinrichtung 101 angeordnet. Die Empfangseinrichtungen 505 oder die Empfangseinheiten 505 weisen dabei bevorzugt einen Abstand d auf, der kleiner als die halbe Wellenlänge λ des Radarsignals ist, somit gilt d < λ/2. Wird die Messung auf die Breite der Objektführungseinrichtung beschränkt, kann der Abstand der Empfangseinrichtungen entsprechend dem benötigten Eindeutigkeitsbereiches auch größer als λ/2 sein. Der Eindeutigkeitsbereich mag dabei den Winkelbereich beschreiben, in dem das berechnete Empfangssignal eindeutig einem Winkel zuordenbar ist, d.h. keine Mehrdeutigkeiten auftreten.

Der Abstand der Sendeeinrichtung zu den Empfangseinrichtungen mag dem Abstand der Sendeeinrichtungen untereinander entsprechen. Es sind aber auch andere Abstände denkbar.

Durch die Wahl eines solchen äquidistanten Abstandes d ≤ λ/2 der Empfangseinrichtungen 505 des Arrays 504 untereinander können Mehrdeutigkeiten im Winkelbereich ± 90° vermieden werden, welche bei Abständen d ≥ λ/2 auftreten würden. Es mag aber auch möglich sein die Empfangseinheiten in nicht äquidistanten Abständen entlang einer Linie zu verteilen.

Die Sendeeinrichtung 502 und die zumindest zwei Empfangseinrichtungen 505 sind in Fig. 5a als separate Einrichtungen dargestellt. Es ist jedoch auch möglich, dass die Sendeeinrichtung 502 ebenfalls als Empfangseinrichtung verwendet wird. Die elektrische Schaltung der Sende-/Empfangseinrichtung ist dabei dafür ausgelegt, einen parallelen Sende/Empfangsmodus zu realisieren. Zur linienförmigen Abtastung sind zumindest zwei Empfangseinrichtungen nötig, weshalb ein Array 504 mit Sende-/Empfangseinrichtungen zumindest zwei Sende-/Empfangseinrichtungen aufweist.

Durch die linienförmige Anordnung der Empfangseinrichtungen 505 bilden die Empfangseinrichtungen 505 ein lineares, eindimensionales Antennenarray 504. Ebenfalls in der Linie kann die Sendeeinrichtung 502 angeordnet sein. Durch diese Anordnung empfangen die Empfangseinrichtungen das zumindest teilweise reflektierte Radarsignal aus den verschiedenen Winkelrichtungen nach einer gewissen Signallaufzeit und damit mit einem dem Abstand zur Objektoberfläche entsprechenden Phasenversatz.

Mittels mathematischer Algorithmen kann das Empfangssignal 510 in mehrere Empfangssignale mit mehreren Empfangsstrahlrichtungen umgewandelt werden. Solch ein Empfangssignal 510 mit beispielsweise 3 Keulen oder mit 3 Empfangsrichtungen ist in Fig. 5a dargestellt. Das Anwenden des mathematischen Algorithmus, um zu Empfangssignalen in unterschiedlichen Empfangsrichtungen zu kommen, wird digitale Strahlformung genannt. Jedes der Empfangssignale mag zu einer Abtastfläche gehören.

Die Empfangseinrichtungen 505 und die einzelne Sendeeinrichtung 502 oder die zumindest zwei Sendeeinrichtungen 502 befinden sich im Wesentlichen auf einer gemeinsamen Ebene, so dass sie im Wesentlichen senkrecht auf die Objektführungseinrichtung ausgerichtet sind. Je nach gewünschter Ortsauflösung kann die Breite des Antenennenarrays 504 angepasst werden, insbesondere der Abstand der Empfangseinrichtungen 505 zueinander. Die Breite des Arrays 504 muss nicht der Breite B der Objektführungseinrichtung 101 entsprechen. Die Breite des Antennenarrays 504 kann kleiner, größer oder gleich der Breite B der Objektführungseinrichtung 101 sein.

Sowohl die Sendeeinrichtung 502 als auch die Empfangseinrichtung 505 ist mit der Steuereinrichtung 501 verbunden und beide werden von der Steuereinrichtung 501 betrieben. Die Steuereinrichtung 501 bildet zusammen mit der Sendeeinrichtung 502 und/oder den zumindest zwei Empfangseinrichtungen 505 einen Sensor 500 oder ein Feldgerät 500. Die Messvorrichtung 530 weist den Sensor 500 und optional die Objektführungseinrichtung 101 auf.

Der Sensor 500 kann eine separate Auswerteeinrichtung (nicht in Fig. 5a oder 5b dargestellt) aufweisen, die die von den Empfangseinrichtungen 502 empfangenen Signale verarbeitet. Sensor und Auswerteeinrichtung können über eine Zweidrahtleitung verbunden sein. Aus den empfangenen Signalen kann die Auswerteeinrichtung den Abstand des Sensors 500 von dem Medium 110 oder von dem Objekt 110 an verschiedenen Stellen 533, 507, 508, 509, 531 der Objektführungseinrichtung 101 bestimmen. Bei den Signalen von den verschiedenen Stellen 533, 507, 508, 509, 531 handelt es sich um verschiedene Empfangsrichtungen, welche durch digitale Strahlformung aus den jeweils von den zumindest zwei Empfangseinrichtungen 505 empfangenen Empfangssignalen in der Nachverarbeitung rekonstruiert werden können. Der Abstand zu den verschiedenen Stellen kann aus den berechneten Signallaufzeiten des Empfangsradarstrahls 510 zu der jeweils betrachteten Stelle 533, 507, 508, 509, 531 unter dem zugehörigen Empfangsstrahlwinkel ermittelt werden. In lateraler Richtung wird die digitale Strahlformung genutzt, um eine vorgebbare Auflösung für die Abtastung des linienförmigen Bereichs zu erzielen.

Die Auswerteeinrichtung kann in den Sensor 500 integriert sein. Alternativ kann die Funktion einer Auswerteeinrichtung von der Steuereinrichtung 501 übernommen werden. Die Auswerteeinrichtung kann aber auch extern zu dem Sensor 500 angeordnet sein, wodurch der Energiebedarf für Berechnungen innerhalb des Sensors reduziert werden kann. So kann beispielsweise bei der Ausführung des Sensors 500 oder des Feldgeräts 500 als Zweileitergerät die Energieversorgung über die selben Leitungen erfolgen, über die auch die Bereitstellung von Messwerten erfolgt oder über die auch die Parametrierung der Messvorrichtung erfolgt, d.h. das Setzen von Parametern in der Messvorrichtung für eine Messung.

Im Folgenden wird davon ausgegangen, dass die Steuereinrichtung 501 die Funktion der Auswerteeinrichtung übernimmt und in den Sensor 500 integriert ist. Die Steuereinrichtung 501 ist durch das Auswerten der Laufzeiten der an der Oberfläche des Objekts 110 reflektierten Radarsignale 510, 551, 552, 553 in der Lage, den Verlauf der Oberfläche des Objekts 110 zu ermitteln. Die Steuervorrichtung 501 kann zusätzlich die Geschwindigkeit der Objekttransporteinrichtung 101 und/oder die Geschwindigkeit eines sich innerhalb der Objekttransporteinrichtung 101 bewegenden Objektes 110 erfassen und/oder steuern. Unter Berücksichtigung der Geschwindigkeit kann das von der Objektführungseinrichtung 101 pro Zeiteinheit transportierte Volumen des Objektes 110 berechnet werden. Aus dem pro Zeiteinheit transportierten Volumen kann das insgesamt transportierte Volumen innerhalb eines Betrachtungszeitraums berechnet werden. Bei bekannter Dichte kann auch die transportierte Masse berechnet werden. Mit diesen ermittelten Kenngrößen kann beispielsweise bestimmt werden, wann ein zulässiges Beladegewicht eines Behälters 111 (nicht gezeigt in Fig. 5a, Fig. 5b) erreicht ist und die Objektführungseinrichtung 101 kann abgeschaltet werden.

In Fig. 5a sind beispielhafte Stellen 507, 508, 509, 533, 531 der welligen Oberflächenstruktur des Objektes 110 dargestellt. Diese Stellen 507, 508, 509, 533, 531 verlaufen in lateraler Richtung entlang eines linienförmigen Bereichs der Objektführungseinrichtung 101 und können Abtastflächen oder Abtaststellen entsprechen. Die Bestimmung des Abstandes des Sensors 500, insbesondere der Empfangseinrichtung 505 und/oder der Sendeeinrichtung 502, von der Oberfläche des Objektes 110 an verschiedenen Stellen 507, 508, 509, 533, 531 wird durch die Veränderung der Empfangsrichtung des Empfangsradarsignals 510 durch digitale Strahlformung in der Empfangseinrichtung 505, insbesondere in der Steuereinrichtung 501 erreicht, nachdem die Sendeeinrichtung 502 die Förderstrecke zunächst auf voller Breite B mit einem Radarsignal bestrahlt hat.

Aufgrund der Antennencharakteristik der Sendeeinrichtung 502 erfasst das Antennenarray 504 jedoch auch Anteile aus den Richtungen 551, 552, 553 in Richtung der Bewegung des Objektes. Durch Auswertung der Frequenzverschiebung der Empfangssignale, welche aufgrund unterschiedlicher Relativgeschwindigkeiten zur Sensoreinheit 500 unterschiedliche Frequenzverschiebungen aufgrund des Dopplereffekt erfahren, lassen sich diese Anteile mit SAR (Synthetic Aperture Radar) Algorithmen auswerten und somit eindeutig lokalisieren. Durch Anwendung der SAR Algorithmen lässt sich eine Fokussierung des interessierenden Bereichs 552' in Bewegungsrichtung erreichen.

Die Veränderung der Empfangsrichtung betrifft die zumindest zwei Empfangseinrichtungen 505. Das Messgerät 500, das Feldgerät 500 oder der Sensor 500 nutzt zur Veränderung der Empfangsrichtung das Prinzip der digitalen Strahlformung (Digital Beam Forming), die in dem Sensor 500 mittels der von den einzelnen Empfangseinrichtungen 505 empfangenen Signale durch Verrechnung der Einzelsignale durchgeführt wird. Zur Strahlformung der Empfangssignale werden die von den Empfangseinrichtungen aus einem weiten Winkelbereich empfangenen Empfangssignale mathematisch mit einem zu ihrer lateralen Position und zur gewünschten Empfangsrichtung passenden Phasenversatz beaufschlagt und miteinander verrechnet. Das Beaufschlagen mit einem Phasenversatz bedeutet, dass von unterschiedlichen Empfangseinrichtungen 505 empfangene Signale mit einem dem Abstand der Empfangseinrichtungen zueinander entsprechenden Phasenwert zueinander verschoben und miteinander verrechnet werden. Durch die Strahlformung lassen sich auch in lateraler Richtung scharf fokussierte Echosignale aus beliebigen Empfangsrichtungen generieren. Diese scharf fokussierten Empfangssignale können entlang des linienförmigen Bereichs liegen und kleine Abtastflächen 508, 512 bilden. Durch diese Maßnahme kann der Verlauf der Oberfläche des Objektes 110 an verschiedenen Stellen 533, 507, 508, 509, 531 der Objektführungseinrichtung 101 ermittelt werden.

Insbesondere kann ein Empfangswinkel vorgegeben werden. Unterschiedliche Empfangssignale zu unterschiedlichen, rechnerisch generierten Empfangsrichtungen sind in Fig. 5a durch die unterschiedlichen Keulen des Empfangsendesignals 510 angedeutet. Die Sendeeinrichtung 502 ist dabei beispielsweise als Kugelstrahler ausgestaltet und beleuchtet gleichzeitig eine Fläche 560, die größer als der linienförmige Bereich 552' ist. Die beleuchtete Fläche 560 oder der Footprint 560 weist die Breite B der Objektführungseinrichtung 101 und die Länge L und somit die Fläche B x L auf der Fördereinrichtung 101 auf. Ein Beispiel eines Footprints560 ist in der Figur 5c dargestellt..

Die Ablenkung der Empfangsstrahlen 510 wird also nicht mit einer mechanischen Komponente zur Strahlablenkung erzielt sondern durch Verändern der Hauptempfangsrichtung des Arrays 504, also durch digitale Strahlformung unter Verwendung der Echokurven der zumindest zwei Empfangseinrichtungen 505. Da alle Empfangseinrichtungen 505 das von der Schüttgutoberfläche verursachte Echo des Sendesignal bis auf einen gewissen Laufzeitversatz aufgrund unterschiedlicher Entfernung der Stellen 507, 508, 509, 533, 531, 511, 512, 513 zur Empfangseinrichtung 505 gleichzeitig empfangen, erfolgt die Datenerfassung der unterschiedlichen Empfangsstrahlrichtungen gleichzeitig oder parallel. Folglich ist pro Messintervall und/oder pro Zeitscheibe nur ein einziges Sendesignal nötig.

In anderen Worten hat das Sendesignal 510 aufgrund der Antennencharakteristik einen rechteckigen oder einen ovalen Footprint 560 auf der Objekttransporteinrichtung 101 und/oder auf dem Objekt 110. Dieser Footprint wird durch das einmalige Aussenden des Sendesignals gleichzeitig beleuchtet.

Die Fig. 5c zeigt einen Ausschnitt einer Aufsicht einer Förderstrecke nach Fig. 5a, 5b, sowie den von der Sendeeinrichtung 502 und den zumindest zwei Empfangseinrichtungen 505 erfassten Footprint 560 gemäß einem exemplarischen Ausführungsbeispiel der vorliegenden Erfindung. In Fig. 5c ist die laterale Richtung mit x und die Bewegungsrichtung mit y bezeichnet. Fig. 5c zeigt insbesondere eine Aufsicht des beleuchteten Bereiches 560 der Ausdehnung L x B. Ohne Beschränkung der Allgemeinheit ist der Footprint in Fig. 5c der einfacheren Darstellung halber rechteckig dargestellt. Durch digitale Strahlformung wird die Abtastung eines linienfömigen Bereichs mit einer Auflösung der Breite B1 in lateraler Richtung und durch Anwendung des SAR Algorithmus mit einer Auflösung L1 in Bewegungsrichtung des Objektes 110 erreicht.

Der Footprint 560 weist im Wesentlichen einen Bereich auf, der die Breite B und die Länge L hat, wie in Fig. 5c dargestellt, und entspricht somit beispielsweise in lateraler Richtung einer Länge B, die von der Stelle 533 zu der Stelle 531 reicht, und in Bewegungsrichtung einer Länge L, die von der Stelle 511 zu der Stelle 513 reicht.

Sämtliche Reflexionen des Footprints 560 werden von den zumindest zwei Empfangseinrichtungen 505 des Antennenarrays 504 mit unterschiedlichen Laufzeiten und/oder mit unterschiedlichen Phasen und/oder unterschiedlicher Dopplerverschiebung gleichzeitig empfangen. Mittels der digitalen Strahlformung und/oder mittels Fokussierung ist es möglich, aus dem Footprint 560 oder aus dem gesamten beleuchteten Bereich 560 einen linienförmigen Bereich 552' zu generieren. Zum Generieren des linienförmigen Bereichs 552' mögen in einem Beispiel Signale, welche nicht aus dem Bereich 552' stammen, mit dem SAR Algorithmus mit Echokurven, welche zuvor oder später aufgenommen wurden, verrechnet werden. Durch Fokussierung des Sendesignals und/oder des Empfangssignals mittels physikalischer Strahlformung und/oder mittels Anwendung des SAR Verfahrens kann die Länge L auf die Linienbreite L1 verschmälert werden. Durch diese Maßnahme kann eine hohe Auflösung in Bewegungsrichtung erzielt werden.

Durch Strahlformung des Empfangssignals 510 kann der linienförmige Bereich 552' durch Abtasten an verschiedenen Stellen 533, 507, 508, 509,531 in Flächen der Breite B1 zerlegt werden. Diese Abtastflächen der Breite B1 und Länge L1 ergeben zusammengesetzt den linienförmigen Bereich 552' der Breite L1 und der Länge B. In Fig. 5c ist die Stelle 508, 512 beispielhaft für eine Abtastfläche dargestellt, die sich sowohl in Bewegungsrichtung als auch in lateraler Richtung im Wesentlichen senkrecht unter dem Sensor 500 befindet. Der gesamte linienförmige Bereich 552' befindet sich im Wesentlichen senkrecht unter dem mit 512 bezeichneten Empfangssignal mit senkrechter Empfangsrichtung, d.h. im Wesentlichen senkrecht unter dem linearen Array 504.

Durch die Erhöhung der Anzahl der Empfangseinrichtungen 505 und/oder der Anzahl der Sendeeinrichtungen 502 des eindimensionalen linearen Arrays 504 in einer Richtung, beispielsweise entlang einer Linie oder Geraden, kann die laterale Auflösung des Sensors 500 erhöht werden, da durch die Erhöhung der Anzahl Empfangseinrichtungen die mittels digitaler Strahlformung (DSF) erreichbare Antennencharakteristik für den Empfangsfall verbessert werden kann. Die laterale Auflösung des Sensors 500 mag die Auflösung in die Richtung bezeichnen, die parallel zur Rotationsachse 521 des Förderbandantriebes liegt. Insbesondere mag unter der Auflösung der kleinste mögliche, physikalisch sinnvolle minimale Unterschied im Empfangswinkel zwischen zwei Stellen 507, 508, 509, 533, 531, 511, 512, 513 verstanden werden. Die laterale Winkelauflösung θ_{DSF} wird hierbei lediglich durch die maximale gesamte laterale Ausdehnung D₁ aller Empfangseinrichtungen 505, d.h. der Arraylänge, und die verwendete Wellenlänge λ nach dem Rayleigh-Kriterium bestimmt und beträgt θ_{DSF} = λ / D₁, gemessen in Radian.

Der kleinste mögliche auflösbare Abstand auf der Objektführungseinrichtung 101 senkrecht unter dem Mittelpunkt der Strecke D₁ ergibt sich somit zu: B1= 2 ^{∗} D_{F} ^{∗} tan( λ / (2^{∗}D₁)). Hierbei ist D_{F} der Abstand der Bezugsebene 131 und der Ebene, in der die Empfangseinrichtung 505 und/oder die Sendeeinrichtung 502 angeordnet ist.

In anderen Worten mag es möglich sein, durch die Erhöhung der Anzahl der Empfangseinrichtungen 505 und/oder der Anzahl der Sendeeinrichtungen 502 unter Beibehaltung des Abstandes d zwischen den Empfangseinrichtungen 505 die Struktur des Objekts 110 an vielen eng beieinander liegenden Stellen 507, 508, 509, 533, 531 entlang einer Linie 552' in lateraler Richtung zu erfassen und so ein besser aufgelöstes Abbild der Struktur des Objekts 110 in dem Sensor 500 zu erzeugen.

Die Bewegungsrichtung 520 des Objekts 110 oder die Bewegung des Massestroms 110 erfolgt im Wesentlichen senkrecht zu der lateralen Richtung x. Die Bewegungsrichtung des Objektes 110 stimmt auf der dem Sensor 500 zugewandten Seite der Objektführungseinrichtung 101 mit der Bewegungsrichtung 520 der Objektführungseinrichtung überein. Auf einer dem Sensor abgewandten Seite verläuft die Bewegungsrichtung 520 der Objektführungseinrichtung 101 entgegengesetzt zu der Bewegungsrichtung des Objektes 110.

In der Bewegungsrichtung 520 des Objekts 110 weist das Antennenarray 504 eine breite Abstrahlcharakteristik und/oder Empfangscharakteristik auf. Die Abstrahlcharakteristik und/oder Empfangscharakteristik entspricht im Wesentlichen der Länge L. Um zu einer möglichst schmalen und daher linienförmigen Empfangscharakteristik L1 auch in Bewegungsrichtung des Objektes 110 zu gelangen, können zusätzliche Rechenverfahren angewendet werden. Mit diesen zusätzlichen Rechenverfahren kann sich die Entfernung zu einer Stelle 511, 512, 513 in Bewegungsrichtung 520 der Oberfläche des Objekts 110 gut bestimmen lassen. In anderen Worten mag es von Interesse sein, die Struktur oder Topologie der Oberfläche des Objektes 110 entlang einer möglichst schmalen Linie mit Breite L1 in lateraler Richtung unterhalb des Arrays 504 zu bestimmen. Es wäre beispielsweise wünschenswert, lediglich die Reflexion des im Wesentlichen senkrechten Signals 512 entlang des linienförmigen Arrays 504 zu erhalten, ohne die Echo-Komponenten 511, 513 zu empfangen. Dazu soll der abgetastete Bereich minimiert werden, der beispielsweise von der Stelle 511 zu der Stelle 513 reicht und die Ausdehnung L aufweist.

In anderen Worten mag ein schmales und im Wesentlichen punktförmiges Abtastsignal sowohl in lateraler Richtung als auch in Bewegungsrichtung angestrebt sein, um die Struktur der Oberfläche des Objekts möglichst genau abzutasten. Die empfangenen Reflexionsanteile, die von den außerhalb der lateral angeordneten Linie 512 liegenden Stellen 511, 513 verursacht werden, sollen ausgeblendet werden. Mittels dem Verfahren der SAR (Radar mit synthetischer Apertur)-Algorithmik wird das Empfangssignal unter Auswertung der Dopplerverschiebung der Empfangssignale 511, 512, 513 in Bewegungsrichtung analysiert, welche sowohl in Richtung der Stelle 511, entsprechend einer positiven Dopplerfrequenz, als auch in Richtung der Stelle 513, entsprechend einer negativen Dopplerfrequenz, durch Bewegung des Objektes entsteht. Echoanteile, die dem linienförmig angeordneten Antennenarray 504 direkt gegenüber liegen, erfahren im Wesentlichen keine Dopplerverschiebung. In anderen Worten mag das bedeuten, dass Echoanteile, die von senkrecht gegenüber dem Antennenarray liegenden Bereichen stammen, im Wesentlichen keine Dopplerverschiebung erfahren. Für das SAR Verfahren wird das durch die Empfangseinrichtungen 505 simultan erfasste Gebiet des Footprints 560 der Größe LxB von der Steuereinrichtung 501 analysiert.

Die erreichbare Winkelauflösung entlang der Bewegungsrichtung entspricht bei Anwendung des SAR Verfahrens θ_{SAR} = λ / L (in Radian). Um die maximal mögliche Auflösung am Ort 512 des Objektes zu erreichen, also um eine möglichst schmale Linie zu erreichen, müssen demnach die kontinuierlich aufgenommenen Messdaten aus dem Zeitfenster Δt = L / v_{B} herangezogen und ausgewertet werden. Hierbei entspricht v_{B} der Geschwindigkeit der Objektführungseinrichtung 101. Der kleinste mögliche auflösbare Abstand auf der Objektführungseinrichtung 101 senkrecht unter dem Mittelpunkt der Strecke D₁ ergibt sich somit zu Ll= 2 ^{∗} D_{F} ^{∗} tan(λ / (2^{∗}L)). Um eine gute Abdeckung zu erreichen wird im Zeitabstand von t₁ = L1/v_{B} eine Zeitscheibe der Oberflächenstruktur in lateraler Richtung ermittelt. Ein größerer zeitlicher Abstand ist jedoch auch realisierbar.

In anderen Worten bedeutet das, dass L die Länge des Abdeckungsbereichs ohne Fokussierungsmaßnahmen beschreibt und L1 die Länge des Abdeckungsbereiches mit Fokussierungsmaßnahmen. Durch Verrechnung mit bereits aufgenommen oder noch aufzunehmenden Echosignalen der in Bewegungsrichtung vor und hinter der Linie liegenden Stellen 511, 513 kann somit eine Fokussierung in Bewegungsrichtung 520 oder in Transportrichtung 520 des Objektes 110 erreicht werden. Folglich kann eine fokussierte linienförmige Abtastung des Bereichs 552' erfolgen.

Die Radar-Entfernungsmessverfahren können die Auswertung eines pulsförmigen Radarsignals oder eines FMCW-Radarsignals aufweisen. Ein pulsförmiges Radarsignal ist amplitudenmoduliert während ein FMCW-Radarsignal frequenzmoduliert ist.

Da die Erfassung der Oberfläche des Objektes 110 mit mehreren zeitlich parallel arbeitenden Empfangseinrichtungen 505 und nachgelagerter, digitaler Strahlformung erfolgt, kann eine sehr hohe Messwiederholrate erzielt werden. Im Vergleich dazu müssen mechanisch abgelenkte Systeme oder Systeme, welche mittels analoger Strahlformung arbeiten und somit den zu erfassenden Bereich seriell abtasten, im gleichen Zeitraum eine Vielzahl an Einzelmessungen durchführen. Da die Messzeit einer einzelnen Radarmessung aufgrund existierender Normen nicht beliebig verkürzt werden kann, können diese Systeme nicht die zur Erfassung von Förderbändern notwendige Messwiederholrate aufweisen. Die Strahlformung des Sendesignals und die Strahlformung des Empfangssignals mag als eine Ablenkung aufgefasst werden.

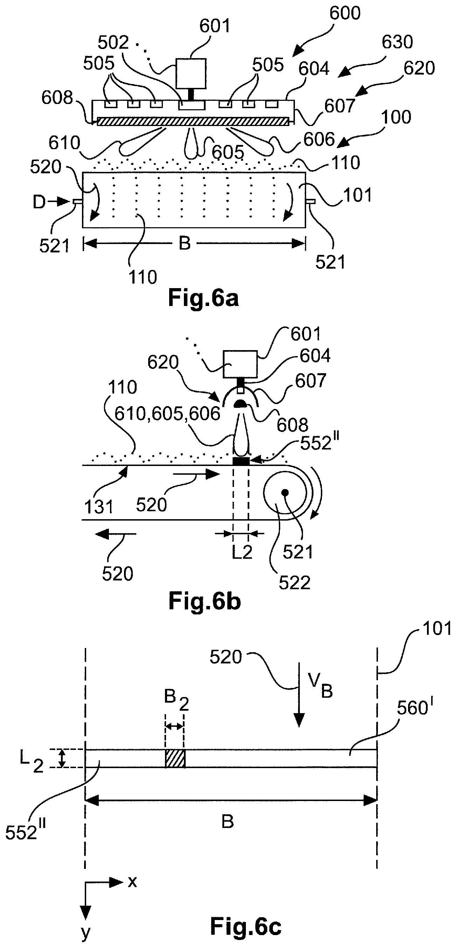

Fig. 6a zeigt eine Frontansicht einer Förderstrecke 100 mit einem weiteren Sensor 600 zur Bestimmung einer Oberflächenstruktur eines Objektes 110 mittels Radarstrahlen gemäß einem exemplarischen Ausführungsbeispiel der vorliegenden Erfindung. Fig. 6b zeigt eine Seitenansicht in der in Fig. 6a durch den Buchstaben D gekennzeichneten Richtung einer Förderstrecke 100 mit einem weiteren Sensor 600 zur Bestimmung einer Oberflächenstruktur eines Objektes mittels Radarstrahlen gemäß einem exemplarischen Ausführungsbeispiel der vorliegenden Erfindung. Bei dem weiteren Sensor 600 handelt es sich um einen Sensor mit physikalischer Strahlformung in Bewegungsrichtung, um eine physikalische Fokussierung in Bewegungsrichtung zu erreichen. Der weitere Sensor 600 entspricht im Wesentlichen dem Sensor aus Fig. 5a und 5b, weist jedoch zusätzlich zu dem Antennenarray 604 eine Parabolrinne 607 auf, mit der eine Strahlfokussierung in der Bewegungsrichtung 520 des Objektes 110 erreicht werden kann. Durch diese physikalische Fokussierung mag die Auswertung des Dopplereffektes mittels SAR-Algorithmus entfallen.

Der Parabolsensor 600 weist die Steuereinrichtung 601 und das eindimensionale Antennenarray 604 auf, welches zumindest eine einzige Sendeeinrichtung 502 und zumindest zwei Empfangseinrichtungen 505 aufweist. Das Antennenarray 604 kann baugleich zu dem Antennenarray 504 sein. Das eindimensionale Antennenarray 604 ist linienförmig aufgebaut, wobei die Sendeeinrichtung 502 in einem Schwerpunkt der Linie angeordnet ist und die Empfangseinrichtungen 505 linienförmig um die Sendeeinrichtungen 502 herum angeordnet sind. Beliebige andere Anordnungen sind denkbar.

Die Empfangssignale 610, 605, 606 der Empfangseinrichtungen 505 werden, wie das in den Figuren Fig. 5a und 5b beschriebene Empfangssignal 510, zur digitalen Strahlformung in lateraler Richtung genutzt. Die Fokussierung der Signale entlang der Transportrichtung erfolgt nicht wie in dem in Fig. 5a und 5b dargestellten Ausführungsbeispiel algorithmisch über den SAR Algorithmus, sondern durch den Einsatz geeigneter Hardwarekomponenten.

Beispielsweise wird das eindimensionale Antennenarray 604 innerhalb einer Parabolrinne 607 angeordnet. Das Antennenarray 604 ist in einem Brennpunkt der Parabolrinne 607 angeordnet. Die Parabolrinne 607 weist eine konkave Form auf, deren Öffnung in Richtung der Objektführungseinrichtung 101 gerichtet ist. Zur Verstärkung der Richtwirkung kann die Parabolrinne 607 als Cassegrain-Antenne 620 ausgeführt sein. Eine Cassegrain-Antenne 620 weist zusätzlich zu der Parabolrinne 607 einen hyperbolischen Gegenreflektor 608 auf, der im Zusammenspiel mit der Parabolrinne 607 sowohl Sendesignale als auch die mittels digitaler Strahlformung in lateraler Richtung fokussierten Empfangssignale 610, 605, 606 entlang der Bewegungsrichtung 520 der Fördereinrichtung 100 fokussiert. Durch diese Fokussierung weitet sich das Sendesignal, sowie die Empfangssignale 610, 605, 606 lediglich auf die Länge L2 auf und erzeugen einen entsprechend schmalen linienförmigen Footprint 560' über die Breite B und der Länge L2 der Objektführungseinrichtung 101. Der linienförmige Footprint 560' erstreckt sich parallel zu der Drehachse 521 der Umlenkrolle 522 der Objektführungseinrichtung 101. Die Parabolrinne 607 ist eine Antenne und somit gilt für sie Reziprozität, d.h. sie kann mit gleichen charakteristischen Eigenschaften sowohl zum Senden als auch zum Empfangen verwendet werden.

Die Messvorrichtung 630 weist den Sensor 600 mit Cassegrain-Parabolrinne 620 und die Objektführungseinrichtung 101 auf. Die Messvorrichtung 630 kann auch lediglich den Sensor 600 aufweisen und ist unabhängig von der Objektführungseinrichtung betreibbar.

Außer der Cassegrain-Parabolrinne 620 können auch andere Antennenkonstruktion zur Fokussierung der Radarwellen genutzt werden. Die mechanische Fokussierung kann alternativ beispielsweise mit Linsenanordnungen oder zweidimensionale Patchantennen erreicht werden, welche zeilenweise entlang der Bewegungsrichtung der Fördereinrichtung 520 fest miteinander verdrahtet werden, um somit über den zwischen den Patches oder Sendeeinrichtungen 502 einer Zeile fest eingestellten Phasenversatz eine Richtcharakterisik zu erreichen.

Bei dem Array 504, also dem Array 504 ohne physikalischer Fokussierungseinrichtung, handelt es sich jedoch um eine eindimensionale Anordnung ohne Fokussierung in Bewegungsrichtung 520 des Objektes 110. Daher wird der SAR Algorithmus ausgenutzt, um die Fokussierung zu erreichen. Der SAR Algorithmus ist bei der physikalisch fokussierten Anordnung des Arrays 604 mit Parabolrinne 607 nach Fig. 6a nicht nötig, kann jedoch zur Unterstützung der Fokussierung eingesetzt werden.

Fig. 6c zeigt zur Veranschaulichung eine Aufsicht des abgetasteten Bereiches der Ausdehnung L2 x B. Durch digitale Strahlformung wird in lateraler Richtung eine Auflösung der Breite B2 und durch Verwendung einer physikalischen Fokussiereinrichtung eine Auflösung L2 erreicht. Ferner ist in Fig. 6c der von der Sendeeinrichtung und Empfangseinrichtung erfasste Footprint 560' dargestellt, der wegen der verwendeten physikalischen Fokussierungseinrichtung im Wesentlichen dem linienförmigen Bereich 552" entspricht.

Die Breite B2 wird mit der im Wesentlichen gleichen Technik der digitalen Signalformung, wie die Breite B1 abgetastet. Die Länge L2 hängt von den physikalischen Eigenschaften der Parabolantenne ab, insbesondere davon, wie diese physikalischen Eigenschaften auf den Strahlengang des Sendesignals und/oder des Empfangssignals wirken.

In Fig. 5c wird die Länge L1 wird durch mathematische Berechnungen erreicht. Während in Fig. 5c das Reflexionssignal der Fläche 560 der Dimension BxL pro Messzeitintervall Δt empfangen wird, wird pro Messzeitintervall Δt1 gemäß Fig. 6c das Reflexionssignal der Fläche 560' mit der Dimension BxL2 empfangen.

Da es sich bei der Abtastfläche L1xB1 des linienförmigen Bereichs 552' aus Fig. 5c und bei der Abtastfläche L2 x B2 des linienförmigen Bereichs 552" aus Fig. 6c um quadratische oder rechteckige Flächen oder um flächige Bereiche des linienförmigen Bereichs 552' und 552" handelt, wird das Volumen des Objekts 110 durch das Volumen von Säulen entsprechender Höhen angenähert. Je kleiner die Abtastflächen 508, 512 gemacht werden können, umso genauer kann das Volumen des linienförmigen Bereichs bestimmt werden.

Zu Störungen der Messergebnisse kann es kommen, wenn es zu Vibrationen der Bezugsebene 131 der Fördereinrichtung 101 oder der Montagestelle des Sensors 500, 600 unabhängig voneinander kommt und somit die Distanz zwischen der Bezugsebene und der Montagestelle des Sensors variiert. Um Störungen durch Vibrationen zu vermeiden kann die Entfernung zu einer vorab bekannten Stelle in die Messung einbezogen werden. Beispielsweise kann eine zusätzliche Entfernungsmessung 614 bei der Empfangsstrahlformung berücksichtigt werden. Zu den Figuren Fig 5a, 5b, 6a, 6b sei angemerkt, dass diese zwar eine Kombination aus Sensor 500, 600 und Objektführungseinrichtung 101 darstellen, dass die Sensoren 500, 600 jedoch auch ohne der Objektführungseinrichtung 101 gefertigt, geliefert und betrieben werden können. Der Winkelbereich, in dem die Empfangsrichtung verstellt werden kann, ist jedoch so einstellbar, dass der Sensor mit jeder beliebigen Objektführungseinrichtung 101 betrieben werden kann. Die Breite der jeweils verwendeten Objektführungseinrichtung kann jedoch den vorgebbaren Winkelbereich der Empfangsrichtungen beeinflussen. Die Steuereinrichtung 501, 601 kann entsprechend den Winkelbereich der Empfangsrichtungen vorgeben.

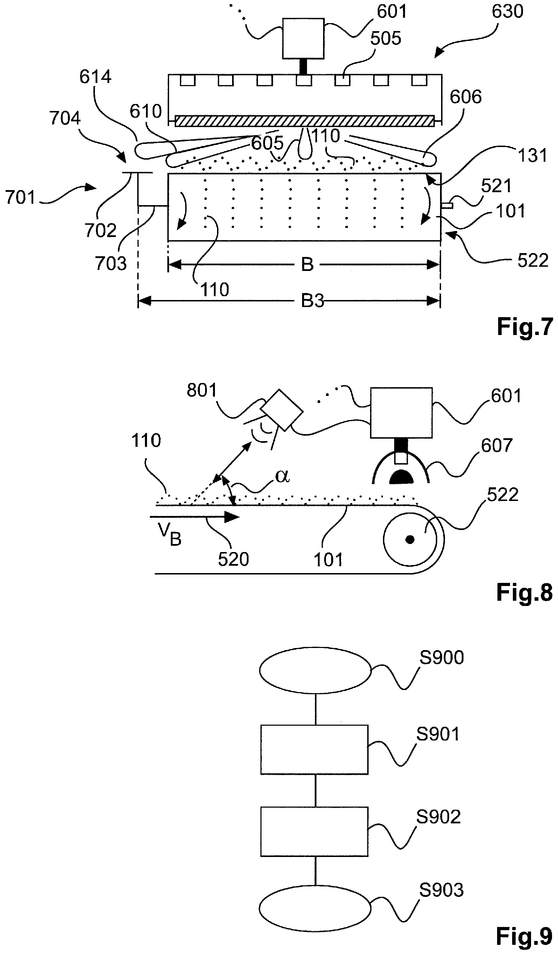

Die Fig. 7 zeigt eine Messvorrichtung 630 mit einer Markierung 701 oder Markierungseinrichtung 701 gemäß einem exemplarischen Ausführungsbeispiel der vorliegenden Erfindung. Auch wenn Fig. 7 eine Messanordnung mit der Cassegrain-Parabolrinne 620 aus Fig. 6a, 6b, 6c zeigt, ist die Verwendung der Markierung 701 auch bei einer Anordnung nach Fig. 5a, 5b, 5c möglich. Die Markierung 701 ist als eine Bezugsreflexionsstelle 701 mit einem Reflexionskörper 702 und einer Halteeinrichtung 703 ausgebildet. Die Bezugsreflexionsstelle 701 ist gut für das Reflektieren von Radarstrahlen geeignet, insbesondere von Radarstrahlen in dem verwendeten Frequenzbereich. Die Halteeinrichtung 703 ist eingerichtet, einen festen Abstand zwischen der Drehachse 521 der Umlenkrolle 522 und dem Reflexionskörper 702 bei Vibrationen einzuhalten. Die Halteeinrichtung mag dafür sorgen, dass sich die Oberfläche des Reflexionskörpers 702 im Wesentlichen auf der gleichen Höhe, wie die Oberfläche der Objektführungseinrichtung 101 befindet, auf der das Objekt 110 liegt oder auf der sich das Objekt 110 bewegt. Die Oberfläche des Reflexionskörpers 702 mag flächig ausgestaltet sein und die Oberfläche 704 des Reflexionskörpers 702 mag sich auf der selben Ebene 131 wie die dem Sensor 630 zugewandte Oberfläche der Objektführungseinrichtung 110 befinden.

In Fig. 7 ist die Objektführungseinrichtung 110 als Förderband 110 ausgebildet. Die Bezugsreflexionsstelle 701 oder die Markierung 701 wird mit in die Oberflächenvermessung durch die Sensoren 500, 600 einbezogen. Dazu wird die Oberflächenabtastung über die laterale Breite B hinaus auf die Breite B3 erweitert, so dass die Markierung 701 von dem Sendesignal 614, 610, 605, 606 mit erfasst wird und auch zu dem reflektierten Signal beiträgt. Da die Position der Markierung bekannt ist, ist auch die Soll-Entfernung der Markierung von dem Sensor 600 bekannt. Verschiebt sich, beispielsweise durch Vibrationen, die Position der Objektführungseinrichtung 101, verschiebt sich auch in gleichem Maße die Position der Markierung 701. Diese Verschiebung wird mit dem Empfangssignal 614 registriert. Wird die Ist-Entfernung der Markierung 701 gemessen, kann anhand der aktuell gemessenen Ist-Entfernung der Oberfläche des Objektes 110 eine Kompensation von Vibrationseffekten durchgeführt werden, wenn angenommen wird, dass sich das Objekt 110 mit der Objektführungseinrichtung 101 bewegt und durch die Vibrationen die Oberflächenstruktur nicht wesentlich verändert wird. In anderen Worten kann mittels der Markierung 701 die aktuelle Lage der Bezugsebene 131 für das Objekt 110 korrigiert werden, so dass die Volumenberechnung und/oder Massenberechnung für das Objekt 110 im Wesentlichen vibrationsfrei durchgeführt werden kann. Die Markierungsvorrichtung 701 sorgt dafür, dass sich die Oberfläche 704 des Reflexionskörpers 702 auf der selben Ebene wie die Bezugsebene 131 der Objektführungseinrichtung 101 befindet. Der Reflexionskörper 702 wird im Wesentlichen unbedeckt von dem Objekt 110 gehalten, beispielsweise da er außerhalb der Begrenzung der Breite B liegt.

Die Geschwindigkeit v_{B} der Objektführungseinrichtung 101 in Bewegungsrichtung 520 kann mit Drehgebern erfasst werden (nicht gezeigt in Figs. 5a, 5b, 6a, 6b, 7), die als Geschwindigkeitsmesseinrichtung genutzt werden und die Winkelgeschwindigkeit der Umlenkrolle 522 messen. Mittels der ermittelten Geschwindigkeit kann der Massen- und/oder Volumenstrom des Objekts 110 pro Zeiteinheit bestimmt werden. Ein Drehgeber kann beispielsweise an der Drehachse 521 angebracht sein.

Fig. 8 zeigt eine Geschwindigkeitsmesseinrichtung 801 zur berührungslosen Bestimmung der Geschwindigkeit des Objektes 110 gemäß einem exemplarischen Ausführungsbeispiel der vorliegenden Erfindung. Die Geschwindigkeitsmesseinrichtung 801 ist mit der Steuereinrichtung 601 verbunden und stellt ihre Ergebnisse der Steuereinrichtung 601 zur Verfügung. Auch wenn in Fig. 8 die Geschwindigkeitsmesseinrichtung 801 in Kombination mit der Steuereinrichtung 601 aus Fig. 6a, 6b gezeigt ist, kann sie mit jeder anderen Steuereinrichtung 501, 601 kombiniert werden. Eine berührungslose Geschwindigkeitsmesseinrichtung kann zusätzlich zu der Verwendung eines Drehgebers oder ohne Drehgeber genutzt werden und die Geschwindigkeit des Mediums 110 erfassen. Während mittels eines Drehgebers nur eine indirekte Erfassung der Geschwindigkeit des Objekts 110 möglich ist, kann mittels der Geschwindigkeitsmesseinrichtung 801 die Geschwindigkeit des Objektes 110 direkt gemessen werden.

Die Geschwindigkeitsmesseinrichtung 801 kann als eine zusätzliche Sende- und Empfangseinrichtung 801 zusätzlich zu der Sendeeinrichtung 502 und/oder zu den zumindest zwei Empfangseinrichtungen 505 ausgeführt sein. Die Geschwindigkeitsmesseinrichtung 801 kann auch als zusätzliche Sende-/Empfangseinrichtung ausgebildet sein, die sowohl ein Radarsignal erzeugen kann, als auch empfangen kann. Jedoch mag aufgrund der kurzen Signallaufzeiten wegen der Nähe zu der Objektführungseinrichtung im Wesentlichen parallel gesendet und empfangen werden. In anderen Worten mag das bedeuten, dass die Sendeinrichtung und die Empfangseinrichtung unabhängig voneinander betrieben wird. Zur Messung der Objektgeschwindigkeit mag die zusätzliche Sendeeinrichtung 801 oder die zusätzliche Empfangseinrichtung 801 in einem definierten Winkel α zur Bewegungsrichtung des Mediums 110 montiert sein. Insbesondere mag die zusätzliche Sendeeinrichtung 801 oder die zusätzliche Empfangseinrichtung 801 in einem definierten Winkel α zu der Oberfläche der Objektführungseinrichtung 101 angeordnet sein. Alternativ mag die zusätzliche Sendeeinrichtung 801 oder die zusätzliche Empfangseinrichtung 801 in einem definierten Winkel α zu der Oberfläche der in Fig. 8 nicht dargestellten Markierung 701 angeordnet sein.

Wird von der Sendeeinrichtung der Geschwindigkeitsmesseinrichtung 801 ein Radarsignal ausgesendet, ergibt sich durch die Montage in dem Winkel α in einem von einer Empfangseinrichtung in der Geschwindigkeitsmesseinrichtung 801 empfangenen zugehörigen Empfangssignal eine von der Geschwindigkeit v_{B} des Objekts 110 abhängige Dopplerverschiebung. Aus dieser Dopplerverschiebung kann innerhalb der Steuereinrichtung 601 die Momentangeschwindigkeit v_{B} des Objekts 110 ermittelt werden. Die Geschwindigkeitsmessvorrichtung 801 kann alternativ auch als ein zusätzliches Radarmessgeräte 801 ausgeführt sein, das unabhängig von der Steuereinrichtung 501, 601 agiert und der Steuereinrichtung 601 die Momentangeschwindigkeit v_{B} des Objekts 110 übermittelt. Die Geschwindigkeitsmesseinrichtung 801 kann auch in den Sensor 500, 600 integriert sein, um einem Anwender ein kompaktes, einfach zu montierendes Messsystem anbieten zu können. Beispielsweise kann eine Sendeeinrichtung 502 und eine Empfangseinrichtung 505 zum Messen der Geschwindigkeit eingerichtet sein. Beispielsweise kann die Geschwindigkeit auch anhand der dem SAR Algorithmus zur Verfügung stehenden Empfangssignalen 551, 552, 553 der Empfangseinheiten 505 ermittelt werden, unter entsprechender Anwendung des in der Beschreibung zu Fig 5b beschriebenen Verfahrens. Die Information über die Geschwindigkeit mag beim Anwenden des SAR Algorithmus ermittelbar sein.

Die Messvorrichtung 530, 630 kann als nachrüstbare Komponente für eine Objektführungseinrichtung 100 ausgestaltet sein und die Steuereinrichtung 501, 601, den Sensor 500, 600 und optional die Geschwindigkeitsmesseinrichtung 801 aufweisen.

Die Fig. 9 zeigt ein Flussdiagramm für ein Verfahren zum Erfassen von Eigenschaften eines Objektes gemäß einem exemplarischen Ausführungsbeispiel der vorliegenden Erfindung. Ausgehend von dem Startzustand S900 erfolgt im Schritt S901 das Aussenden eines Sendesignals über eine Sendeeinrichtung und das Empfangen eines Empfangssignals über zumindest zwei Empfangseinrichtungen. Die Empfangssignale werden von dem selben Sendesignal verursacht. Im Falle der mathematischen Fokussierung wird ein Reflexionssignal der Fläche L x B empfangen, also des Footprints 560. Im Falle der physikalischen Fokussierung wird das Reflexionssignal der Fläche L2 x B empfangen, also des linienförmigen Bereichs 552" oder des Footprints 560'.

Das Senden und Empfangen des Signals erfolgt in einem Beispiel in der selben Ebene in einem vorgebbaren Abstand gegenüber einer Objektführungseinrichtung, insbesondere über einer der Sendeeinrichtung und/oder der Empfangseinrichtung zugewandten Oberfläche der Objektführungseinrichtung.

In einem Beispiel wird das Sendesignal so ausgestaltet, dass es mit einer Periodendauer L1/v_{B} oder L2/v_{B} versendet wird, es muss jedoch nicht jeder Bereich der Objektoberfläche abgetastet werden, um zu einem brauchbaren Ergebnis zu kommen.

In einem Beispiel wird die Bewegung des Objektes zumindest während des Aussendens und des Empfangens des Signals auf einen Bereich innerhalb einer vorgebbaren Breite B begrenzt. Das Sendesignal und/oder das Empfangssignal wird so fokussiert, dass die vorgebbare Breite der Objektführungseinrichtung erfasst wird.

Im Schritt S902 erfolgt die Auswertung der Struktur des Objektes anhand der Empfangssignale der zumindest zwei Empfangseinrichtungen entlang eines linienförmigen Bereichs innerhalb der Breite der Objektführungseinrichtung indem die Breite in kleinere Abtastflächen zerlegt und ausgewertet wird. Die Länge der Linie, über die die Auswertung erfolgt, mag der Breite B der Objektführungseinrichtung entsprechen.

Im Fall der mathematischen Fokussierung wird der laterale Bereich B durch digitale Strahlformung aus Abtastflächen der Breite B1 zusammengesetzt und die Fokussierung auf die Länge L1 erfolgt durch Anwenden des SAR Algorithmus.

Im Falle der physikalischen Fokussierung kann der SAR Algorithmus entfallen, da bereits ein physikalisch fokussiertes Signal vorliegt und lediglich der laterale Bereich B durch digitale Strahlformung aus Abtastflächen der Breite B2 zusammengesetzt wird.

Ein ermittelter Volumenwert oder eine Zeitscheibe mit einer Oberflächentopologie kann bereitgestellt werden. Ebenso kann die akkumulierte Oberflächenstruktur über eine vorgebbare Zeitdauer bereitgestellt werden. In welcher Form die Messwerte bereitgestellt werden kann durch einen Einstelleinrichtung eingestellt werden.

Im Schritt S903 endet das Verfahren.

Ergänzend ist darauf hinzuweisen, dass "umfassend" und "aufweisend" keine anderen Elemente oder Schritte ausschließt und "eine" oder "ein" keine Vielzahl ausschließt. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Messvorrichtung (500, 600, 530, 630) zum Erfassen von Eigenschaften eines Objektes (110) auf einer Objektführungseinrichtung (101) aufweisend:
eine Sendeeinrichtung (502);
zumindest zwei Empfangseinrichtungen (505);
eine Steuereinrichtung (501, 601);
wobei die Steuereinrichtung (501, 601) eingerichtet ist, ein Radar-Sendesignal über die Sendeeinrichtung (502) auszusenden; und
wobei die Steuereinrichtung (501, 601) eingerichtet ist, Empfangssignale (510, 551, 552, 553, 610, 605, 606), verursacht durch das Radar-Sendesignal, über die zumindest zwei Empfangseinrichtungen (505) zu empfangen;
wobei die Steuereinrichtung (501, 601) eingerichtet ist, anhand der Empfangssignale (510, 551, 552, 553, 610, 605, 606) der zumindest zwei Empfangseinrichtungen (505) die Struktur des Objektes (110) entlang eines linienförmigen Bereichs (130, 552', 552") innerhalb einer Breite (B) der Objektführungseinrichtung (101) auszuwerten, und aus einem Höhenverlauf des Objektes entlang des linienförmigen Bereichs die Topologie der Oberfläche des Objekts und die Höhe der Oberfläche des Objekts und daraus das Volumen unterhalb des Höhenverlaufs zu ermitteln.

2. Die Messvorrichtung (500, 600, 530, 630) nach Anspruch 1, wobei die Sendeeinrichtung (502) und die zumindest zwei Empfangseinrichtungen (505) in der selben Ebene in einem vorgebbaren Abstand (D_{F}) gegenüber der Objektführungseinrichtung (101) angeordnet sind.

3. Die Messvorrichtung (500, 600, 530, 630) nach Anspruch 1 oder 2, wobei die Sendeeinrichtung (502) und/oder die zumindest zwei Empfangseinrichtungen (505) linienförmig angeordnet sind.

4. Die Messvorrichtung (500, 600, 530, 630) nach einem der Ansprüche 1 bis 3, ferner aufweisend:
eine Objektführungseinrichtung (101);
wobei die Objektführungseinrichtung (101) eingerichtet ist, eine Bewegung des Objektes (110) auf den Bereich innerhalb der Breite (B) zu begrenzen.

5. Die Messvorrichtung (500, 600, 530, 630) nach der Anspruch 4, wobei die zumindest zwei Empfangseinrichtungen (505) und die Sendeeinrichtung (502) innerhalb eines Bereiches der Breite (B) der Objektführungseinrichtung (101) angeordnet sind.

6. Die Messvorrichtung (500, 600, 530, 630) nach Anspruch 4 oder 5, wobei die Objektführungseinrichtung (101) eine Markierungseinrichtung (701) aufweist, um eine Bezugsebene (131, 704) festzulegen.

7. Die Messvorrichtung (500, 600, 530, 630) nach einem der Ansprüche 1 bis 6, wobei die Messvorrichtung (530, 630) eingerichtet ist, die Hauptempfangsrichtung der Empfangseinrichtungen (505) zu verändern.

8. Die Messvorrichtung (500, 600, 530, 630) nach Anspruch 7, wobei zum Verändern der der Hauptempfangsrichtung (510, 610, 605, 606) der Empfangseinrichtungen (505) ein Verfahren der digitalen Strahlformung genutzt wird.

9. Die Messvorrichtung (500, 600, 530, 630) nach einem der Ansprüche 4 bis 8, wobei die Objektführungseinrichtung (101) eine Einrichtung ist, ausgewählt aus der Gruppe der Einrichtungen bestehend aus:
einem Förderband;
einer Rütteleinrichtung; und
einer Fahrbahn.

10. Die Messvorrichtung (500, 600, 530, 630) nach einem der Ansprüche 1 bis 9, weiter aufweisend:
eine Geschwindigkeitsmesseinrichtung (801);
wobei die Geschwindigkeitsmesseinrichtung (801) eingerichtet ist, eine Bewegungsgeschwindigkeit des Objekts (110) zu ermitteln.

11. Die Messvorrichtung (500, 600, 530, 630) nach einem der Ansprüche 1 bis 10, wobei das Objekt (110) ein Schüttgut, ein Fahrzeug und/oder eine Person ist.

12. Die Messvorrichtung (500, 600, 530, 630) nach einem der Ansprüche 1 bis 11, wobei die Steuereinrichtung (501, 601) eingerichtet ist, die Topologie des Objekts zu ermitteln und aus der Topologie das Volumen und/oder die Masse des Objekts zu bestimmen.

13. Die Messvorrichtung (500, 600, 530, 630) nach einem der Ansprüche 1 bis 12, wobei die Messvorrichtung (530, 630) als Zweileitersystem ausgebildet ist.

14. Verfahren zum Erfassen von Eigenschaften eines Objektes auf einer Objektführungseinrichtung, aufweisend:
Aussenden eines Radar-Sendesignals über eine Sendeeinrichtung;
Empfangen von Empfangssignalen über zumindest zwei Empfangseinrichtungen, verursacht von dem Radar-Sendesignal;
Auswerten der Struktur des Objektes entlang eines linienförmigen Bereichs innerhalb einer Breite der Objektführungseinrichtung anhand der Empfangssignale der zumindest zwei Empfangseinrichtungen, und, aus einem Höhenverlauf des Objektes entlang des linienförmigen Bereichs, Ermitteln der Topologie der Oberfläche des Objekts und der Höhe der Oberfläche des Objekts und daraus des Volumens unterhalb des Höhenverlaufs.

15. Computerprogrammprodukt, welches, wenn es von einem Prozessor ausgeführt wird, das Verfahren nach Anspruch 14 ausführt.

## Claims

1. Measuring apparatus (500, 600, 530, 630) for detecting properties of an object (110) on an object guidance means (101), comprising:
a transmitter (502);
at least two receivers (505);
a control device (501, 601);
wherein the control device (501, 601) is configured to transmit a radar transmit signal by means of the transmitter (502); and
wherein the control device (501, 601) is configured to receive by means of the at least two receivers (505) receive signals (510, 551, 552, 553, 610, 605, 606) which are caused by the radar transmit signal;
wherein the control device (501, 601) is configured to use the receive signals (510, 551, 552, 553, 610, 605, 606) of the at least two receivers (505) to analyse the structure of the object (110) along a linear region (130, 552', 552") inside a width (B) of the object guidance means (101), and to determine from a height profile of the object along the linear region the topology of the surface of the object and the height of the surface of the object and from this the volume under the height profile.

2. The measuring apparatus (500, 600, 530, 630) according to claim 1, wherein the transmitter (502) and the at least two receivers (505) are arranged in the same plane at a definable distance (D_{F}) from the object guidance means (101).

3. The measuring apparatus (500, 600, 530, 630) according to either claim 1 or claim 2, wherein the transmitter (502) and/or the at least two receivers (505) are arranged in a line.

4. The measuring apparatus (500, 600, 530, 630) according to any of claims 1 to 3, further comprising:
an object guidance means (101);
wherein the object guidance means (101) is configured to restrict a movement of the object (110) to a region inside the width (B).

5. The measuring apparatus (500, 600, 530, 630) according to claim 4, wherein the at least two receivers (505) and the transmitter (502) are arranged inside a region of the width (B) of the object guidance means (101).

6. The measuring apparatus (500, 600, 530, 630) according to claim 4 or 5, wherein the object guidance means (101) comprises a marker device (701), in order to define a reference plane (131, 704).

7. The measuring apparatus (500, 600, 530, 630) according to any of claims 1 to 6, wherein the measuring apparatus (530, 630) is configured to change the main receive direction of the receivers (505).

8. The measuring apparatus (500, 600, 530, 630) according to claim 7, wherein a digital beamforming method is used to change the main receive direction (510, 610, 605, 606) of the receivers (505).

9. The measuring apparatus (500, 600, 530, 630) according to any of claims 4 to 8, wherein the object guidance means (101) is a device selected from the group of devices that consists of:
a conveyor belt;
a vibrating device; and
a roadway.

10. The measuring apparatus (500, 600, 530, 630) according to any of claims 1 to 9, further comprising:
a speed measuring device (801);
wherein the speed measuring device (801) is configured to determine a speed of movement of the object (110).

11. The measuring apparatus (500, 600, 530, 630) according to any of claims 1 to 10, wherein the object (110) is a bulk material, a vehicle and/or a person.

12. The measuring apparatus (500, 600, 530, 630) according to any of claims 1 to 11, wherein the control device (501, 601) is configured to determine the topology of the object and to determine the volume and/or mass of the object from the topology.

13. The measuring apparatus (500, 600, 530, 630) according to any of claims 1 to 12, wherein the measuring apparatus (530, 630) is designed as a two-wire system.

14. Method for detecting properties of an object on an object guidance means, comprising:
transmitting a radar transmit signal by means of a transmitter;
receiving by means of at least two receivers receive signals which are caused by the transmit signal;
analysing the structure of the object using the receive signals of the at least two receivers along a linear region within a width of the object guidance means, and, determining, from the height profile of the object along the linear region, the topology of the surface of the object and the height of the surface of the object and from this the volume under the height profile.

15. Computer program product which, when executed by a processor, performs the method according to claim 14.

## Revendications

1. Dispositif de mesure (500, 600, 530, 630) pour détecter des propriétés d'un objet (110) sur un moyen de guidage d'objet (101), présentant :
un moyen d'émission (502) ;
au moins deux moyens de réception (505) ;
un moyen de commande (501, 601) ;
dans lequel le moyen de commande (501, 601) est conçu pour émettre un signal d'émission radar par l'intermédiaire du moyen d'émission (502) ; et
dans lequel le moyen de commande (501, 601) est conçu pour recevoir des signaux de réception (510, 551, 552, 553, 610, 605, 606) provoqués par le signal d'émission radar par l'intermédiaire desdits au moins deux moyens de réception (505) ;
dans lequel le moyen de commande (501, 601) est conçu pour, sur la base des signaux reçus (510, 551, 552, 553, 610, 605, 606) desdits au moins deux moyens de réception (505), évaluer la structure de l'objet (110) le long d'une zone en forme de ligne (130, 552', 552") à l'intérieur d'une largeur (B) du moyen de guidage d'objet (101) et, à partir d'un profil de hauteur de l'objet le long de la zone en forme de ligne, déterminer la topologie de la surface de l'objet et la hauteur de la surface de l'objet et, à partir de cela, le volume sous le profil de hauteur.

2. Dispositif de mesure (500, 600, 530, 630) selon la revendication 1, dans lequel le moyen d'émission (502) et lesdits au moins deux moyens de réception (505) sont disposés dans le même plan à une distance prédéfinissable (DF) par rapport au moyen de guidage d'objet (101).

3. Dispositif de mesure (500, 600, 530, 630) selon la revendication 1 ou 2, dans lequel le moyen d'émission (502) et/ou lesdits au moins deux moyens de réception (505) sont disposés sur une ligne.

4. Dispositif de mesure (500, 600, 530, 630) selon l'une des revendications 1 à 3, présentant en outre :
un moyen de guidage d'objet (101) ;
dans lequel le moyen de guidage d'objet (101) est conçu pour limiter un déplacement de l'objet (110) à la zone située à l'intérieur de la largeur (B).

5. Dispositif de mesure (500, 600, 530, 630) selon la revendication 4, dans lequel lesdits au moins deux moyens de réception (505) et le moyen d'émission (502) sont disposés à l'intérieur d'une zone de largeur (B) du moyen de guidage d'objet (101).

6. Dispositif de mesure (500, 600, 530, 630) selon la revendication 4 ou 5, dans lequel le moyen de guidage d'objet (101) présente un moyen de marquage (701) pour définir un plan de référence (131, 704).

7. Dispositif de mesure (500, 600, 530, 630) selon l'une des revendications 1 à 6, dans lequel le dispositif de mesure (530, 630) est conçu pour changer la direction de réception principale des moyens de réception (505).

8. Dispositif de mesure (500, 600, 530, 630) selon la revendication 7, dans lequel un procédé de mise en forme numérique de faisceau est utilisé pour changer la direction de réception principale (510, 610, 605, 606) des moyens de réception (505).

9. Dispositif de mesure (500, 600, 530, 630) selon l'une des revendications 4 à 8, dans lequel le moyen de guidage d'objet (101) est un moyen choisi dans le groupe de moyens constitué par :
une bande transporteuse ;
un moyen vibrant ; et
une voie de circulation.

10. Dispositif de mesure (500, 600, 530, 630) selon l'une des revendications 1 à 9, présentant en outre :
un moyen de mesure de vitesse (801) ;
dans lequel le moyen de mesure de vitesse (801) est conçu pour déterminer une vitesse de déplacement de l'objet (110).

11. Dispositif de mesure (500, 600, 530, 630) selon l'une des revendications 1 à 10, dans lequel l'objet (110) est une matière en vrac, un véhicule et/ou une personne.

12. Dispositif de mesure (500, 600, 530, 630) selon l'une des revendications 1 à 11, dans lequel le moyen de commande (501, 601) est conçu pour déterminer la topologie de l'objet et pour déterminer le volume et/ou la masse de l'objet à partir de la topologie.

13. Dispositif de mesure (500, 600, 530, 630) selon l'une des revendications 1 à 12, dans lequel le dispositif de mesure (530, 630) est conçu comme un système à deux conducteurs.

14. Procédé pour détecter des propriétés d'un objet sur un moyen de guidage d'objet, comprenant les étapes consistant à :
émettre un signal d'émission radar par un moyen d'émission ;
recevoir des signaux de réception provoqués par le signal d'émission radar par l'intermédiaire d'au moins deux moyens de réception ;
évaluer la structure de l'objet le long d'une zone en forme de ligne à l'intérieur d'une largeur du moyen de guidage d'objet sur la base des signaux de réception desdits au moins deux moyens de réception et, à partir d'un profil de hauteur de l'objet le long de la zone en forme de ligne, déterminer la topologie de la surface de l'objet et la hauteur de la surface de l'objet et, à partir de cela, le volume sous le profil de hauteur.

15. Produit programme d'ordinateur qui, lorsqu'il est exécuté par un processeur, met en œuvre le procédé selon la revendication 14.
